# EUROPÄISCHE PATENTANMELDUNG

(11) **EP 4 718 569 A2**
(43) Veröffentlichungstag der Anmeldung: **01.04.2026**
(21) Anmeldenummer: 25200038.5
(22) Anmeldetag: 03.09.2025
(51) Int. Cl.: H01M 10/39, H01M 50/609, H01M 50/147, H01M 50/148, H01M 50/186

(54) **AUFNAHME ELEKTROCHEMISCHE-ZELLE ZUM BEFÜLLEN UND OPTIONAL VERSCHLIESSEN DER ELEKTROCHEMISCHEN-ZELLE SOWIE VORRICHTUNG ZUM BEFÜLLEN UND OPTIMAL VERSCHLIESSEN MINDESTENS EINER ELEKTROCHEMISCHEN-ZELLE**

(30) Priorität: 10.09.2024 DE 102024126017
(71) Anmelder: Altech Batteries GmbH, 02979 Spreetal (DE)
(72) Erfinder: Hofacker, Martin, 07747 Jena (DE); Schüßler, Benjamin, 04229 Leipzig (DE); Walter, Ronny, 07629 Hermsdorf (DE)
(74) Vertreter: Bendele, Tanja

(57) **Zusammenfassung**

Gegenstand der Erfindung ist eine Aufnahme (2) zum Befüllen mindestens einer Elektrochemischen-Zelle (0), insbesondere zur Durchführung einer Infiltration der Kathode mit einer Salzschmelze bei erhöhter Temperatur und/oder unter Inertgas, vorzugsweise unter Ausschluss von Feuchtigkeit und/oder Sauerstoff, wobei die Aufnahme (2) zur Aufnahme der Elektrochemischen-Zelle eine innere Oberfläche (2.3), insbesondere mit mindestens einer Seitenwand (2.4) und optional einem Boden (2.5) aufweist und die Aufnahme mit innerer Oberfläche eine obere Öffnung (2.1) zur Aufnahme, d.h. Positionierung der Elektrochemischen-Zelle (0) in der Aufnahme (2), aufweist, wobei die innere Oberfläche der Aufnahme (2) aus einem gegenüber Chlorid-Ionen beständigem Material ist, bevorzugt aus einem gegenüber Chlorid-Ionen beständigen Material bei erhöhter Temperatur. Des Weiteren ist Gegenstand der Erfindung eine Vorrichtung und ein System zum Befüllen mindestens einer Elektrochemischen-Zelle (0) und zum Verschließen dieser Zelle, insbesondere zum hermetisch temporären oder hermetisch dauerhaften Verschließen.

## Beschreibung

Gegenstand der Erfindung ist eine Aufnahme zum Befüllen mindestens einer Elektrochemischen-Zelle, insbesondere eine Elektrochemischen-Natrium-Metallchlorid-Zelle, insbesondere eine Natrium-Nickelchlorid Zelle. Die Aufnahme kann zur Durchführung einer Infiltration der Kathode mit einem Infiltrat, vorzugsweise einer Salzschmelze, bei erhöhter Temperatur und/oder unter Inertgas, vorzugsweise unter Ausschluss von Feuchte und/oder Sauerstoff verwendet werden. Die Aufnahme zur Aufnahme, und insbesondere Positionierung, der Elektrochemischen-Zelle weist eine innere Oberfläche auf, vorzugsweise mit mindestens einer Seitenwand und optional einem Boden, wobei die Aufnahme mit innerer Oberfläche eine obere Öffnung zur Aufnahme, d.h. Positionierung der Elektrochemischen-Zelle in der Aufnahme, aufweist, und wobei die innere Oberfläche der Aufnahme aus einem gegenüber Chlorid-Ionen beständigem Material ist, bevorzugt aus einem bei erhöhter Temperatur gegenüber Chlorid-Ionen beständigen Material. Des Weiteren ist Gegenstand der Erfindung eine Vorrichtung und eines Systems zum Befüllen mindestens einer Elektrochemischen-Zelle, insbesondere zum Befüllen mit der Kathode und/oder mit einem Infiltrat, vorzugsweise einer Infiltration der Kathode mit einer Salzschmelze. Des Weiteren kann die Vorrichtung und/oder das System zum Verschließen dieser Elektrochemischen-Zelle, insbesondere zum hermetisch temporären oder hermetisch dauerhaften Verschließen eingesetzt werden. Das dauerhafte Verschließen erfolgt mittels Schweißen.

Hochtemperaturbatterien auf Basis von beispielsweise Natrium-Nickelchlorid Zellen umfassen eine poröse Kathode, einen für Natrium-Ionen durchlässigen Separator in Form eines Festkörperlektrolyten und einen bei erhöhter Temperatur flüssigen Sekundärelektrolyten, wie Natriumaluminiumtetrachlorid (NaAlCl₄), Natrium-Tetrachchloroaluminat. Der Sekundärelektrolyt muss unter Ausschluss von Feuchte in die Elektrochemische-Zelle eingefüllt werden. Damit die Schmelze nicht beim Überführen in die Elektrochemische-Zelle erstarrt, ist zu gewährleisten, dass die poröse Kathode und die gesamte Zelle sowie alle Bauteile mit denen der Sekundärelektrolyt in Kontakt kommt deutlich oberhalb der Schmelztemperatur des Sekundärelektrolyten aufweisen und zugleich frei von Feuchte sind. Zudem wird angestrebt, dass die Elektrochemische-Zelle in einem evakuierten Zustand inflitrierbar ist, um die Prozesszeiten zu reduzieren und eine möglichst homogene Infiltration zu gewährleisten. Dazu sollte vermieden werden, dass das Infiltrat ein Inertgas aus den porösen Kathodengranulat langsam verdrängen muss.

Gleichfalls muss eine definierte Einstellung des Druckes, vorzugsweise des Vakuums, bei hohen Temperaturen möglich sein, um bei einem definierten Druck und in einem definierten Temperaturbereich eine vorgegebene Menge an Sekundärelektrolyten als Infiltrat in die Kathode der Elektrochemische-Zelle zu infiltrieren. Dabei ist es besonders problematisch, dass sich der Dampfdruck des Sekundärelektrolyten unter diesen Bedingungen ändert. Ist der Druck zu gering, d.h. das Vakuum zu groß, dann kann es zu Blasenbildung kommen und/oder Aluminiumtrichlorid aus dem Natriumaluminiumtetrachlorid verdampfen. Ein Verdampfen von Aluminiumtrichlorid, würde jedoch das eingestellte Verhältnis von NaAlCl₄ zu AlCl₃ bzw. Natriumchlorid zu Aluminiumtrichlorid verändern und damit die Chemie der Elektrochemischen-Zelle, insbesondere das Säure-Base-Verhältnis der Salzschmelze verändert.

Eine Aufgabe der Erfindung war es daher einen Heißinfiltrationsprozess zu ermöglichen, bei dem sowohl die Temperatur, insbesondere Temperaturen oberhalb 100 °C bis 350 °C, der Komponenten, des Sekundärelektrolyten als auch die Atmosphäre innerhalb der Komponenten mit denen der Sekundärelektrolyt in Kontakt kommt definiert einstellen zu können. Zugleich soll es möglich sein, die Temperatur unabhängig vom Druck, insbesondere Vakuum, als auch den Druck unabhängig regulieren zu können. Ferner sollen Komponenten entwickelt werden, die die Einstellung der Atmosphäre innerhalb der Komponenten ermöglichen, insbesondere einer Atmosphäre, die frei von Feuchte ist, denn Aluminiumtrichlorid und Natriumaluminiumtetrachlorid reagieren in Gegenwart von Feuchte oder Wasser mit diesen unter Bildung von HCl. HCl ist ein sehr korrosives Chlorid-Ionen enthaltendes Gas, das die Materialien von Komponenten korrosiv schädigt. Daher sind Komponenten zu entwickeln, die die Einstellung einer trockenen Atmosphäre erlauben. Des Weiteren sollen Komponenten entwickelt werden, mit denen eine möglichst energieeffiziente Prozessführung in einem Verfahren zur Heißinfiltration ermöglicht wird.

Die Aufgaben wurden überraschend gelöst mit einer Aufnahme nach Anspruch 1, einer Vorrichtung nach Anspruch 9 und einem System nach Anspruch 16. Weitere Gegenstände der Erfindung sind Verschlussmittel der Ansprüche 17 und 18 als auch die Kits der Ansprüche 19 und 20.

Gegenstand der Erfindung ist somit eine Aufnahme zum Befüllen mindestens einer Elektrochemischen-Zelle, wobei die Aufnahme zur Aufnahme der Elektrochemischen-Zelle, insbesondere ausgebildet ist zur teilweise bis vollständigen Aufnahme der Elektrochemischen-Zelle, wobei die Aufnahme eine innere Oberfläche, insbesondere eine innere Oberfläche mindestens einer Seitenwand, insbesondere einer umlaufenden Seitenwand und optional mit einem Boden aufweist, wobei Aufnahme mit innerer Oberfläche eine obere Öffnung zur Aufnahme der Elektrochemischen-Zelle aufweist, und wobei die innere Oberfläche der Aufnahme aus einem gegenüber Chlorid-Ionen beständigem Material ist. Die Aufnahme kann insbesondere zur Positionierung der Elektrochemischen-Zelle dienen, wobei die Zelle in der Aufnahme, vorzugsweise vertikal entlang der Längsmittelachse der Zelle ausgerichtet ist, und/oder die Zelle von der Aufnahme vollständig in der Länge aufgenommen wird. Des Weiteren ist es nach einer Ausführungsform bevorzugt, wenn die Aufnahme dazu angepasst ist, die in der Aufnahme angeordnete Elektrochemische-Zelle zu erhitzen, insbesondere die Zelle auf eine Temperatur zwischen 20 °C bis 350 °C zu temperieren, vorzugsweise in einem Temperaturbereich oberhalb von 100 °C bis 350 °C zu temperieren, und/oder die Elektrochemische-Zelle frei von Feuchte / Feuchtigkeit und/oder Wasser bereitzustellen, insbesondere die Elektrochemische-Zelle umfassend die Zellkomponenten und/oder die Kathode zu trocknen und vorteilhaft frei von Feuchte oder frei von einem Gehalt an Wasser bereitzustellen. Die Elektrochemische-Zelle muss nach einer besonders bevorzugten Ausführungsform frei von Feuchte und/oder Wasser sein, um die Zellchemie nicht negativ zu einer Hydrolyse von chemischen Bestandteilen zu beeinflussen. Die so getrocknete Elektrochemische-Zelle, insbesondere umfassend die getrocknete Kathode, kann nachfolgend mit Sekundärelektrolyt befüllt werden.

Nach einer bevorzugten Ausführungsform ist es bevorzugt, wenn die innere Oberfläche der Aufnahme aus bei erhöhter Temperatur gegenüber Chlorid-Ionen beständigen Material gebildet ist, insbesondere einem Material, das gegenüber Chlorid-Ionen bei einer Temperatur größer gleich 50 °C, insbesondere größer gleich 100 °C, beständig ist. Bevorzugt ist ein Material, das mit einer Korrosionsrate von kleiner gleich 0,1 mm Dickenabnahme/Jahr aufweist.

Des Weiteren ist es nach einer Ausführungsform bevorzugt, wenn die Aufnahme an der oberen Öffnung eine Anschlussgeometrie aufweist. Die Anschlussgeometrie ist, insbesondere zur Verbindung mit einer Überführeinheit und/oder mindestens einer Schleuse ausgebildet, bevorzugt zur Verbindung mit mindestens einer Zuführeinheit der Überführeinheit. Dabei kann es weiterhin bevorzugt sein, wenn eine Überführeinheit zwei bis eine Vielzahl an Zuführeinheiten aufweist, die mit der oberen Öffnung je einer Aufnahme verbindbar sind. Die Überführeinheit kann dazu einen oder zwei bis eine Vielzahl an trichterförmigen Hohlräumen aufweisen, die jeweils einzeln eine Zuführeinheit im unteren Bereich der Hohlräume aufweisen. Die jeweiligen Zuführeinheiten können mit je einer Zuführung einer Elektrochemischen-Zelle verbunden werden. Es wird vorzugsweise ein hermetisch dichter Hohlraum ausgebildet. Besonders bevorzugt erfolgt eine hermetisch dichte Verbindung der Überführeinheit, besonders bevorzugt eine reversibel lösbare, hermetisch dichte Verbindung der Überführeinheit und/oder mindestens einer Schleuse, mit dem Einführbereich einer Elektrochemischen-Zelle. Eine erfindungsgemäße Aufnahme kann ausgebildet sein als eine Beschichtung, insbesondere eine Beschichtung in einem Gehäuse und/oder einer Heizvorrichtung, als eine Hülle, insbesondere eine Beschichtung in einem Gehäuse und/oder einer Heizvorrichtung, und/oder als auch als ein Inlet, insbesondere in einem Gehäuse und/oder einer Heizvorrichtung. Das Gehäuse kann vorzugsweise umfassen eine Heizvorrichtung und eine außen um die Heizvorrichtung angeordnete Isoliervorrichtung, insbesondere umfassend eine Isolierung.

Die Anschlussgeometrie kann umfassen einen Bajonett-Verschluss, Schraubverschluss, Steckverschluss und/oder ein Verschluss basierend auf einem oder mehrerer dieser Verschlüsse, wie ein Steck- und Schraubverschluss, wie ein bspw. ein Objektiv-Bajonettverschluss, und/oder bspw. basierend auf einem Schraubgewinde, wie M39, M40- und M42-Anschlüsse und/oder auf einem T-Anschluss basierend. Gleichfalls kann die Anschlussgeometrie auf einem Außenanschluss und/oder Innenanschluss, wie Außengewinde und/oder Innengewinde basieren. Alternativ kann die Anschlussgeometrie eine Konnektorgeometrie aufweisen und der unteren Öffnung einer Schleuse, wie einer ersten Schleuse oder einer zweiten Schleuse oder die Zuführung der Überführeinheit weisen eine entsprechend reziproke Konnektorgeometrie auf. Die Anschlussgeometrie kann gleichfalls konisch oder kegelstumpfartig ausgebildet sein. Und optional weist die Anschlussgeometrie und die komplementäre Zuführung oder die untere Öffnung einer jeweiligen Schleuse eine Anschlussgeometrie mit einer definierten rauen, inneren Oberfläche und äußeren Oberfläche der komplementären Anschlussgeometrien auf, so dass eine hermetische Abdichtung mittels einer Beschichtung der Anschlussgeometrien möglich sein kann, wie einer Beschichtung mit einem Fluor-enthaltenden polymeren Material oder einem entsprechenden korrosionsbeständigem Öl und/oder Wachs oder einer Mischung dieser.

Gegenstand der Erfindung ist daher auch eine untere Öffnung einer Schleuse, wie eine erste untere Öffnung einer ersten Schleuse und/oder eine zweite untere Öffnung einer zweiten Schleuse, die jeweils eine Anschlussgeometrie aufweisen, die vorzugsweise komplementär zur Anschlussgeometrie der Aufnahme ausgebildet sind. Gleichfalls kann die eine bis jede Zuführeinheit der Übereinheit eine Anschlussgeometrie aufweisen.

Die jeweilige Anschlussgeometrie, wie Bajonett-Geometrie oder Konnektorgeometrie kann innen oder außen an der oberen Öffnung einer Aufnahme vorgesehen sein und komplementär an der Überführeinheit und/oder der mindestens einen Schleuse vorgesehen sein.

Nach einer weiteren Ausführungsform ist es besonders bevorzugt, wenn die inneren Oberfläche aus gegenüber Chlorid-Ionen beständige Materials der Aufnahme ausgebildet ist als eine Beschichtung in einem 3D-Formkörper insbesondere umfassend Ausnehmungen, insbesondere einer Heizvorrichtung umfassend Ausnehmungen, in denen die Aufnahme ausgebildet oder eingesetzt ist. Alternativ kann die innere Oberfläche der Aufnahme oder die Aufnahme umfassend die innere Oberfläche als Ganzes ein Bestandteil eines 3D-Formkörpers in Form eines Inlets sein, dass in den 3D-Formkörper, vorzugsweise eine Heizvorrichtung eingesetzt ist. Die Aufnahme kann auch ein Bestandteil einer Vorrichtung und/oder Systems zum Befüllen von Elektrochemischen-Zellen sein. Nach einer Alternative ist die innere Oberfläche der Aufnahme, vorzugsweise eine Beschichtung und/oder ein Inlet oder eine Beschichtung der inneren Oberfläche eines Inlets. Die Aufnahme ist insbesondere als ein Sackloch ausgebildet. In einer bevorzugten Alternative kann die mindestens eine Aufnahme, insbesondere das mindestens eine Sackloch, in einem 3D-Formkörper als mindestens eine Aufnahme, insbesondere Sackloch, bis zu einer Vielzahl an Aufnahmen in dem 3D-Förmkörper ausgebildet sein oder die mindestens eine Aufnahme, insbesondere Sackloch, oder die Vielzahl an Aufnahmen sind je als ein 3D-Formkörper ausgebildet, insbesondere umfassend eine Seitenwand und einen Boden oder mit Boden, vorzugsweise umfassend jeweils eine innere Oberfläche und eine äußere Oberfläche. Ein Sackloch kann Seitenwand und Boden umfassen.

Nach einer weiteren Ausführungsform ist es besonders bevorzugt, wenn das gegenüber Chlorid-Ionen beständige Material, insbesondere das bei erhöhten Temperaturen Chlorid-beständige Material, insbesondere bei größer gleich 50 °C gegenüber Chlorid-Ionen beständige Material, bevorzugt bei größer gleich 100 °C, besonders bevorzugt bei größer gleich 150 °C, vorzugsweise bei kleiner gleich 350 °C gegenüber Chlorid-Ionen beständige Material,
i) Nickel umfasst, insbesondere umfasst das Material eine Nickellegierung, insbesondere mit einem Nickelgehalt von größer gleich 30 Gew.-% und optional einem Phosphorgehalt von größer gleich 5 Gew.-% in Bezug auf die Gesamtzusammensetzung von 100 Gew.-% der Nickel-Legierung. Insbesondere bevorzugt ist eine Nickellegierung als Beschichtung, insbesondere einer vollflächigen Beschichtung mit einer Schichtdicke von größer gleich 2 Mikrometer, insbesondere von größer gleich 25 Mikrometer, bevorzugt von größer gleich 45 Mikrometer, insbesondere bis kleiner 5 mm. Alternativ oder zusätzlich kann die Aufnahme und die innere Oberfläche materialeinstückig aus einer Nickellegierung gebildet sein. Alternativ können die innere Oberfläche und die Aufnahme als ein Inlet ausgebildet sein. Gleichfalls kann die Aufnahme umfassend die innere Oberfläche als ein Behälter ausgebildet sein.

Ferner kann es in einer Ausführungsform bevorzugt, sein, wenn die innere Oberfläche umfasst eine Beschichtung umfassend Gold, Goldlegierung, Molybdän, Molybdän-Legierung, Glas, Borsilikatglas, Emaille, Glaskeramik, Keramiken, wie Aluminiumoxid(e) und/oder eine Kombination der genannten Beschichtungen, vorzugsweise von mindestens zwei der genannten Beschichtungen. In einer Alternative kann die innere Oberfläche und/oder die Aufnahme gebildet sein aus Glas, Borsilikatglas, Emaille, Glaskeramik, Keramiken, wie Aluminiumoxid(e) und/oder eine Kombination von zweien den Materialien und optional einer inneren Oberfläche, die aus Gold oder einer Goldlegierung und/oder Molybdän oder einer Molybdän-Legierung gebildet ist. Eine Molybdän-Legierungen umfasst vorzugsweise einen Gehalt an Molybdän von 5 bis 99,9 Gew.-% und/oder der Nickel-Gehalt von 30 bis 99 Gew.-% in der Gesamtzusammensetzung.

Vorzugsweise umfasst eine Nickel enthaltende Legierung als Beschichtung der inneren Oberfläche und/oder die materialeinstückige Nickel enthaltende Legierung als innere Oberfläche und Aufnahme einen Gehalt an Nickel von größer gleich 30 Gew.-%, insbesondere größer gleich 50 Gew.-% Nickel, weiter bevorzugt einen Gehalt an Nickel von größer gleich 75 Gew.-% und vorzugsweise einen Gehalt an Phosphor von größer gleich 5 Gew.-%, bevorzugt einen Gehalt an Phosphor von größer gleich 9 Gew.-% in Bezug auf die Gesamtzusammensetzung von 100 Gew.-% der Nickel enthaltenden Beschichtung und/oder Nickel enthaltenden Legierung aufweist.

Nach einer weiteren Alternative kann ein gegenüber Chlorid-Ionen beständiges Material alternativ oder zusätzlich umfassen ii) nicht-rostenden Stahl, insbesondere nicht-rostenden Stahl a) mit einem definierten Molybdän- und/oder Nickel-Gehalt und/oder b) ferritischen und/oder austenitisch-ferritischem nicht-rostenden Stahl. Bevorzugt beträgt der Gehalt an Molybdän von 1 bis 15 Gew.-% und/oder der Nickel-Gehalt von 30 bis 50 Gew.-% im nichtrostenden Stahl.

In einer weiteren Alternative kann ein gegenüber Chlorid-Ionen beständiges Material alternativ oder zusätzlich umfassen iii) eine Chlorid-beständige Zusammensetzung umfasst mindestens ein Polymer umfassend, insbesondere ein halogeniertes oder perhalogeniertes Polymer, wie vorzugsweise ein fluoriertes Polymer, bevorzugt ein perfluoriertes Polymer, besonders bevorzugt umfassend PTFE (Polytetrafluorethylen), PFEP (Perfluorethylenpropylen), FEP (Fluorethylenpropylen), PFA (Perfluoralkoxy-Polymere), PCTFE (Polychlortrifluorethylen), ETFE (Ethylen-Tetrafluorethylen) und/oder eine Mischung umfassend mindestens zwei der Polymere und optional umfassend anorganische Partikel und/oder diese Zusammensetzung infiltriert in einem keramischen Gerüst.

Als ein gegenüber Chlorid-Ionen bei erhöhter Temperatur beständiges Material gilt insbesondere ein Material, dass gegenüber Chlorid-Ionen bei einer Temperatur größer gleich 75 °C beständig ist, bevorzugt bei größer gleich 100 °C, besonders bevorzugt bei kleiner gleich 350 °C. Dabei ist ein Nickel und optional Molybdän und/oder Phosphor enthaltendes Material als gegenüber Chlorid-Ionen beständiges Material besonders bevorzugt. Dabei gilt ein Material als gegenüber Chlorid-Ionen insbesondere beständig, wenn die Korrosionsrate kleiner gleich 0,1 mm Dickenabnahme/Jahr entspricht.

Gleichfalls Gegenstand der Erfindung kann eine Aufnahme sein, die umfasst oder besteht aus einem gegenüber Chlorid-Ionen beständigen Material umfassend i) Nickellegierung mit einem Nickelgehalt von größer gleich 45 Gew.-%, insbesondere größer 75 Gew.-%, bevorzugt größer 90 Gew.-%, und einem Phosphorgehalt von größer gleich 8 Gew.-% in Bezug auf die Gesamtzusammensetzung von 100 Gew.-% der Nickellegierung. Dabei ist es weiter bevorzugt, wenn die innere Oberfläche elektropoliert ist, und/oder
ii) nicht-rostenden Stahl umfassend einen Stahl mit einem Gehalt an Chrom von 0 bis 10 Gew.-%, einem Gehalt an Molybdän von 0,01 bis 15 Gew.-% und einem Gehalt an Stickstoff von 1 bis 70 Gew.-% in Bezug auf die Gesamtzusammensetzung des nicht-rostenden Stahls. Nach einer weiteren Alternative oder zusätzlich weist das gegenüber Chlorid-Ionen beständige Material ii) eine Oberflächenbeschaffenheit mit sehr geringer Rauheit, insbesondere ist die Oberfläche elektropoliert.

Nach einer Alternative ist Gegenstand der Erfindung eine Aufnahme mit einer inneren Oberfläche der Aufnahme, die umfasst eine Beschichtung, insbesondere eine flächige Beschichtung, vorzugsweise flächendeckende Beschichtung, aus einem gegenüber Chlorid-Ionen beständigem Material mit einer Schichtdicke von größer gleich 2 Mikrometer, insbesondere größer gleich 10 Mikrometer, bevorzugt 20 Mikrometer, insbesondere größer gleich 50 Mikrometer, bevorzugt bis zu 5 mm. Dabei ist es weiter bevorzugt, wenn die weitere Aufnahme bspw. der Formkörper der Aufnahme aus einer Aluminiumlegierung gebildet ist.

Ferner kann nach einer Ausführungsform der Erfindung i) eine Aufnahme oder die eine Aufnahme einer Mehrzahl von Aufnahmen in einem mehrteilig ausgebildeten 3D-Formkörper oder materialeinstückig ausgebildeten 3D-Formkörper aus thermisch leitfähigem Metall oder einer metallischen Legierung gebildet sein. Die 3D-Formkörper können gebildet sein als bspw. Strangpress-, Strangguss- und/oder extrudierte Formkörper.

Insbesondere ist die Aufnahme oder kann die eine Aufnahme einer Mehrzahl von Aufnahmen in einem 3D-Heizblock als Heizvorrichtung ausgebildet sein. Dabei ist es bevorzugt, wenn der 3D-Heizblock umfasst Aluminium oder eine Aluminium-Legierung. Dabei ist es weiter bevorzugt, wenn der 3D-Heizblock eine Aluminiumlegierung oder ein Aluminium mit einem Gehalt von kleiner gleich 0,5 Gew.-% an Zink und optional einen Gehalt an Kupfer von kleiner gleich 1 Gew.-% in der Gesamtzusammensetzung aufweist.

Weiter ist es bevorzugt, wenn a) die jeweilige innere Oberfläche einer Aufnahme und der Formkörper materialeinstückig ausgebildet sind und aus einem gegenüber Chlorid-Ionen beständigem Material gebildet sind oder b) die innere Oberfläche eine Schicht, insbesondere ein Schicht eines Inlets oder ein Inlet, aus einem gegenüber Chlorid-Ionen beständigem Material ist und in einem mehrteilig ausgebildeten Formkörper oder materialeinstückig ausgebildeten Formkörper aus thermisch leitfähigem Metall oder einer metallischen Legierung angeordnet ist. Der Formkörper kann vorzugsweise aus einer vorgenannten Aluminiumlegierung gebildet sein und die Beschichtung aus einem vorgenannten gegenüber Chlorid-Ionen beständigem Material gebildet sein.

In einer weiteren Alternative kann es bevorzugt sein, wenn **ii)** an der äußeren Oberfläche der Aufnahme zumindest teilweise und optional bis vollständig eine Heizvorrichtung angeordnet ist, insbesondere ein 3D-Heizblock als Heizvorrichtung, bevorzugt umfasst der Heizblock Aluminium oder eine vorgenannte Aluminiumlegierung, und/oder ein Heizmittel, insbesondere ist die äußere Oberfläche zumindest teilweise von einer Heizvorrichtung und/oder einem Heizmittel umgeben. In einer alternativen Ausführungsform kann der 3D-Heizblock Heizpatronen, Heizmanschetten und/oder Düsenheizung etc. umfassen. Bevorzugte Heizmittel umfassen, bspw. eine Widerstandsheizung, Konvektionsheizung, Infrarotstrahler und/oder induktiv erhitzbare Heizmittel oder Kombinationen umfassend mindestens zwei der vorgenannten Heizmittel.

Nach einer weiteren Alternative kann es bevorzugt sein, wenn die Aufnahme einen Hohlraum ausbildet, in den die Elektrochemische-Zelle einsetzbar ist, vorzugsweise vollständig einsetzbar ist. Bevorzugt ist dieser Hohlraum im wesentlichen komplementär zur äußeren seitlichen und unteren Wand der Elektrochemischen-Zelle ausgebildet, und optional ist die Aufnahme mittels eines Verschlussmittels, einer Überführeinheit und/oder mindestens einer Schleuse hermetisch verschließbar. Die innerer Oberfläche der Ausnehmung kann seitlich zur äußeren Seitenwand einer Elektrochemischen-Zellen einen gewissen Abstand aufweisen. Der Abstand kann möglichst klein gewählt werden, um ein einfaches Einsetzen der Elektrochemischen-Zelle zu ermöglichen und zugleich das zwischen der Zelle und der inneren Oberfläche gebildete Volumen nicht zu groß zu wählen, um einen optimalen Wärmeübergang von einer Heizvorrichtung über die Aufnahme auf die Zelle zu ermöglichen. Die Aufnahme oder die Aufnahmen weisen einen Hohlraum auf, der teilweise bis vollständig die Elektrochemische-Zelle umhüllt und optional mittels mindestens eines Verschlussmittels, einer Überführeinheit und/oder mindestens einer Schleuse hermetisch verschließbar ist.

Die mindestens eine Schleuse kann umfassen, mindestens eine umlaufende Seitenwand, insbesondere zwei bis eine Vielzahl an umlaufenden Seitenwänden, mindestens eine untere Öffnung, mindestens eine obere Öffnung und - optional mindestens ein Dichtmittel, vorzugsweise ein Dichtmittel je Öffnung - und mindestens einen Schleusen-Verschluss zum hermetischen Verschließen der mindestens einen oberen Öffnung und/oder mindestens einen Atmosphären-Anschluss. Die mindestens eine Schleuse kann ausgebildet sein in Form eines Trichters, Zylinders, Kegelstumpfes oder anderer geeigneter Geometrien. In einer Alternative kann die mindestens eine Schleuse eine umlaufende Seitenwand aufweisen und/oder innen in einem Bereich oder als obere Wand eine flächige Anordnung mit hermetisch verschließbaren Öffnungen, wobei die Öffnungen vorzugsweise in der Vorrichtung oberhalb der Einführöffnungen der Elektrochemischen-Zelle angeordnet sind.

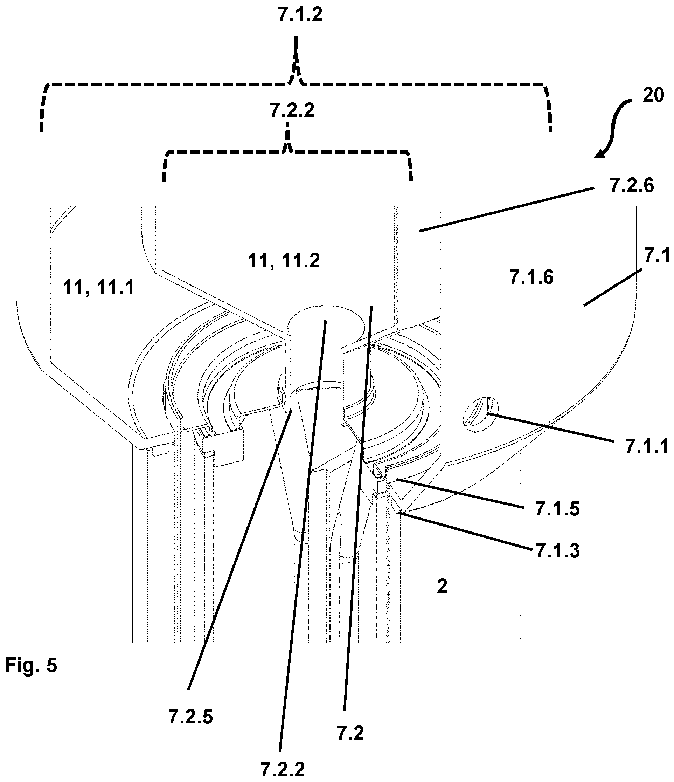

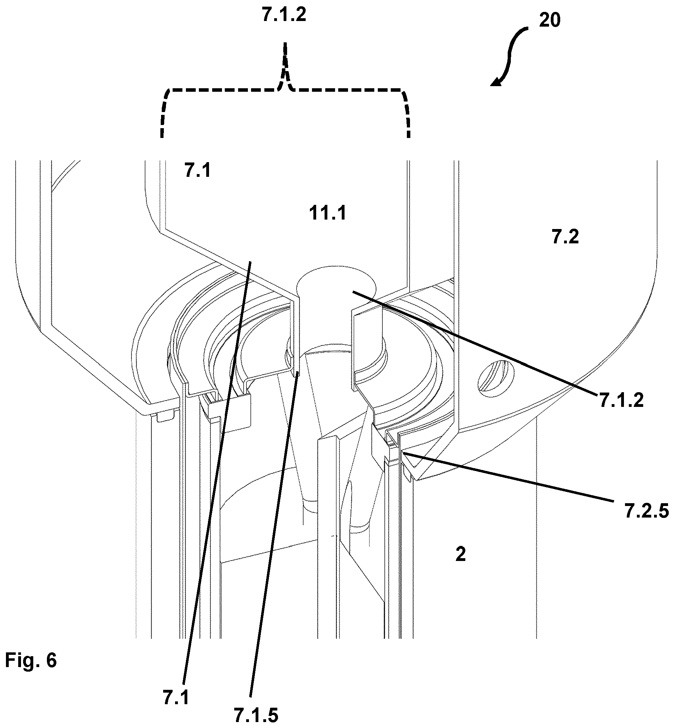

Die mindestens eine Schleuse kann eine erste Schleuse sein, insbesondere eine Atmosphären-Schleuse, mit erstem Atmosphären-Anschluss, mit erstem Überführbereich, optional mit Dichtmittel der ersten Schleuse und mit oberer Öffnung und unterer Öffnung und mit mindestens einer umlaufenden Seitenwand, die sich von der oberen bis zur unteren Öffnung erstreckt. Dabei kann die obere Öffnung reversibel lösbar und/oder festlegbar mit einem Verschlussmittel hermetisch dicht verschlossen werden. In einer Alternative kann die Schleuse als oberer Öffnung eine Öffnung an der Seitenwand aufweisen und eine Wand an der Oberseite der mindestens einen Schleuse, wie der ersten Schleuse und/oder zweiten Schleuse aufweisen. Die untere Öffnung kann, insbesondere verbunden mit dem Gehäuse zur Aufnahme der Heizvorrichtung und/oder der Aufnahme der Elektrochemischen Zelle und/oder der oberen Öffnung der Aufnahme und/oder der Isoliervorrichtung den innerhalb der Schleuse gebildeten Hohlraum hermetisch abdichten oder dichtet den Hohlraum hermetisch ab. In einer alternativen Ausführungsform kann eine erste Schleuse in einer zweiten Schleuse angeordnet sein, wie beispielsweise in den Figuren 5 und 6 dargestellt. Dabei kann in der ersten Schleuse beispielsweise ein Infiltrat in die Einfüllöffnung der Elektrochemischen-Zelle in die Kathode eingefüllt werden, wobei die zweite Schleuse zur Einstellung der, die erste Schleuse umgebenden Atmosphäre verwendet werden kann. In einer Ausführungsform kann eine zweite Schleuse bereitgestellt werden, die umfasst einen Atmosphären-Anschluss mit zweitem Überführbereich, optional mit Dichtmittel, der zweiten Schleuse und mit oberer Öffnung und unterer Öffnung der zweiten Schleuse mit einer umlaufenden Seitenwand, die sich von der oberen bis zur unteren Öffnung erstreckt. Auch hier kann die obere Öffnung an der mindestens einen umlaufenden Seitenwand angeordnet sein.

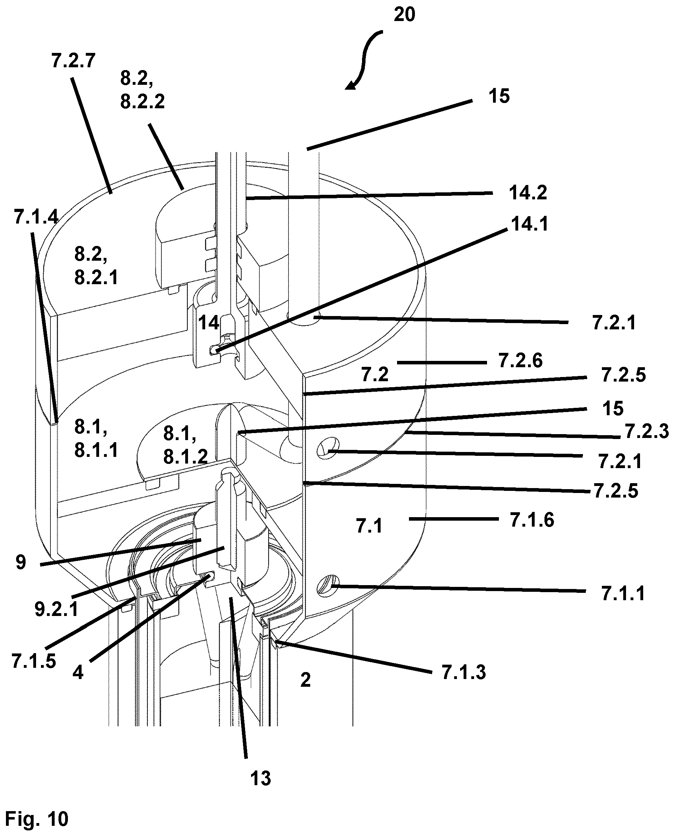

In einer weiteren Alternative können eine erste Schleuse und eine zweite Schleuse aufeinander gestapelt vorliegen, wie in Figur 10, dargestellt. In dieser Anordnung kann die untere Öffnung der zweiten Schleuse auf der oberen Öffnung der ersten Schleuse angeordnet sein. In dieser Anordnung kann es sinnvoll sein, wenn in einem oberen Bereich und/oder inneren Bereich der ersten Schleuse und/oder zweiten Schleuse in einer Ebene eine Anordnung mit einer Anzahl an Öffnungen entsprechend einer Anzahl an Elektrochemischen-Zellen in Aufnahmen vorliegen, wobei die Öffnungen mit Verschlussmitteln und/oder Lasergläsern hermetisch, also hermetisch dicht, dauerhaft verschließbar sind oder reversibel hermetisch dicht verschließbar sind. So kann diese Anordnung beispielsweise genutzt werden, um durch die Öffnungen, insbesondere durch die Lasergläser mittels Laserschweißen die Einfüllbereiche der Elektrochemischen-Zelle hermetisch dicht, insbesondere mit definiert eingestellter Atmosphäre, verschweißen, d.h. die Lasergläser sind in dieser Anordnung Laserverschweißbar.

In einer gestapelten Anordnung kann auch ein Atmosphären-Anschluss wie in der Figur 10 genutzt werden, um einen inneren Verschluss eines mehrteiligen Verschlusses einer Schleuse mittels angelegtem Vakuum öffnen zu können, um mittels einer Vorrichtung, insbesondere einer Greifvorrichtung, innerhalb des gebildeten Gesamthohlraumes umfassend den Hohlraum der ersten Schleuse und den Hohlraum der zweiten Schleuse und optional weiterer Schleusen und/oder den Hohlraum des Kathodenraume, ein Verschlussmittel, insbesondere mit Positionierhilfe, aus dem Einfüllbereich der Elektrochemischen-Zelle entnehmen zu können. Durch die Verwendung von mehrteiligen Verschlüssen der mindestens einen Schleuse können mittels hermetisch dicht eingeführter Vorrichtungen, insbesondere Greifvorrichtungen optional umfassend mindestens ein Werkzeug, innerhalb des oder der hermetischen Hohlräume oder dem Gesamthohlraum Verschlussmittel der Elektrochemischen-Zelle gewechselt werden oder auch Ventile geöffnet und geschlossen werden.

Bevorzugt umfasst die mindestens eine Schleuse, insbesondere die erste und/oder zweite Schleuse an ihrer jeweiligen unteren Öffnung ein Dichtmittel zum hermetischen Abdichten der Verbindung i) von oberer Öffnung der ersten Schleuse und unterer Öffnung der zweiten Schleuse und/oder ii) von oberer Öffnung der Aufnahme der Elektrochemischen-Zelle und/oder iii) zum Abdichten der Verbindung mit einem 3D-Formkörper, insbesondere der Heizvorrichtung, Behälter und/oder einem Gehäuse. Dabei ist die mindestens eine Schleuse vorzugsweise jeweils ausgebildet als hermetisch abdichtbare Schleuse i) für die Einstellung und/oder Regelung der Atmosphäre im Hohlraum, insbesondere wobei die mindestens eine Schleuse jeweils umfasst mindestens einen Atmosphären-Anschluss vorzugsweise mehrere Atmosphären-Anschlüsse. In einer alternativen Ausführungsform kann jede Schleuse mindestens zwei Atmosphären-Anschlüsse aufweisen. Besonders bevorzugt ist die mindestens eine hermetisch dichte Schleuse, wenn sie auf der Elektrochemischen-Zelle und/oder der Aufnahme angeordnet ist und vorzugsweise die Atmosphären-Anschlüsse hermetisch und/oder die jeweilige oberer Öffnung verschlossen sind, insbesondere hermetisch dicht.

Nach einer weiteren besonderen Ausführungsform wird eine Vorrichtung zum Befüllen und optional Verschließen mindestens einer Elektrochemischen-Zelle mit einem Einfüllbereich beansprucht, wobei die die Vorrichtung umfasst
- mindestens eine Aufnahme, insbesondere zur Aufnahme einer Elektrochemischen-Zelle, bevorzugt aufweisend eine Elektrochemische-Zelle, vorzugsweise ein oder einer Mehrzahl an Aufnahmen, und optional umfassend
   a) eine Überführeinheit, wobei die Überführeinheit mindestens eine Zuführung zur reversibel lösbaren oder festlegbaren Verbindung, insbesondere dichten Verbindung, bevorzugt hermetischen Verbindung, mit dem Einfüllbereich der Elektrochemischen-Zelle aufweist, und/oder
   b) mindestens eine Schleuse aufweist, wobei die mindestens eine Schleuse ausgebildet ist zur Einstellung und/oder Regulierung einer Atmosphäre in einem hermetisch abdichtbaren Hohlraum, bevorzugt umfassend eine erste Schleuse und eine zweite Schleuse und optional weitere Schleusen, die jeweils einen ersten Hohlraum und zweiten Hohlraum und optional eine weiteren Hohlraum ausbilden und zu einem oder mehreren Gesamthohlräum(en) ausgebildet werden können,
- wobei sich der jeweilige hermetisch abdichtbare Hohlraum oder hermetischer Hohlraum ausbildet und/oder ein hermetischer Hohlraum vorliegt, wenn
   i) die mindestens eine Schleuse, insbesondere die erste Schleuse, zweite Schleuse oder optional weitere Schleuse, jeweils einen Überführbereich aufweist, und der jeweilige Überführbereich der mindestens einen Schleuse mit dem jeweiligen Einfüllbereich einer Elektrochemischen-Zelle verbunden ist, und/oder
   ii) die mindestens eine Schleuse, insbesondere mit ihrer unteren Öffnung,
      a) auf eine obere Öffnung einer weiteren Schleuse aufgesetzt wird,
      b) auf eine Heizvorrichtung umfassend mindestens eine Aufnahme aufgesetzt wird, wobei optional die mindestens eine Aufnahme eine Elektrochemische-Zelle umfasst, und/oder
      c) auf einem 3D-Formkörper, insbesondere auf ein Gehäuse umfassend die Heizvorrichtung aufgesetzt und optional festgelegt wird, und/oder
      d) mit der oberen Öffnung der Aufnahme für eine Elektrochemische-Zelle verbunden wird, umfassend
      c) Verschlussmittel für Einfüllbereich der Elektrochemische-Zelle,
- wobei sich ein hermetisch abdichtbarer Hohlraum oder der jeweilige hermetisch abdichtbare oder der jeweilige hermetisch dichte Hohlraum ausbildet, wenn
   i) die b) mindestens eine Schleuse einen Überführbereich aufweist, und der jeweilige Überführbereich der mindestens einen Schleuse mit dem jeweiligen Einfüllbereich einer Elektrochemischen-Zelle verbunden ist, und/oder
   ii) die b) mindestens eine Schleuse, insbesondere mit ihrer unteren Öffnung a) auf eine obere Öffnung einer weiteren Schleuse aufgesetzt wird, b) auf eine Heizvorrichtung umfassend mindestens eine Aufnahme aufgesetzt wird, wobei optional die mindestens eine Aufnahme eine Elektrochemische-Zelle umfasst, oder c) auf ein Gehäuse (1.1) umfassend die Heizvorrichtung (1) aufgesetzt und optional festgelegt wird, und/oder c) mit der oberen Öffnung (2.1) der Aufnahme (2) für eine Elektrochemische-Zelle (0) verbunden wird und jeweils eine Verbindung ausgebildet wird und/oder
   c) wobei sich ein hermetisch abdichtbarer Hohlraum (13) oder hermetischer Hohlraum im Kathodenraum ausbildet, wenn das Verschlussmittel (9) in den Einfüllbereich (10) der Elektrochemischen-Zelle (0) eingesetzt wird, insbesondere bildet sich ein hermetisch dichter Hohlraum (13) im Kathodenraum der Elektrochemischen-Zelle (0) aus.

Es bildet sich insbesondere ein hermetischer Hohlraum, wenn eine Schleuse auf oder in eine weitere Schleuse auf- oder eingesetzt wird, insbesondere eine zweite oder weitere Schleuse wird auf- oder in eine erste Schleuse eingesetzt wird oder zweite Schleuse oder weitere Schleuse, auf- oder eingesetzt wird, und jeweils eine Verbindung, insbesondere eine hermetische Verbindung, ausgebildet wird. Auf diese Weise können erste, zweite und weitere hermetische Hohlräume erhalten werden, in denen insbesondere einzeln die Einstellung der Atmosphäre erfolgen kann als auch eine unabhängige Verwendung von Werkzeugen oder Operationen durchgeführt werden können, ohne, dass bspw. Feuchte oder oxidierende Atmosphäre an die Kathode und/oder das Infiltrat gelangen kann.

Bevorzugt sind die Schleusen insbesondere reversibel festlegbar und bilden einen oder mehrere hermetisch dichte Hohlräume, in denen jeweils einzeln oder in Gruppen oder gesamt Operationen unter Luft und/oder Feuchtigkeitsausschluss bei Raumtemperatur bis 350 °C durchgeführt werden können.

Sowohl eine Schleuse, insbesondere mit ihrer unteren Öffnung, oder ein Verschlussmittel oder eine Überführeinheit sind vorzugsweise ausgebildet, zum Einsetzen in den Einfüllbereich der Elektrochemischen-Zelle oder zum Aufsetzen auf die Aufnahme oder ein Heizmittel, Isoliermittel oder Gehäuse, welches die Aufnahme aufnimmt, um einen hermetischen Hohlraum mit einer definierten Atmosphäre einstellen zu können.

Der Abstand inneren Oberfläche der Seitenwand einer Aufnahme zur äußeren Seitenwand einer jeweiligen Elektrochemischen-Zelle wird vorzugsweise so gering gewählt, dass die Zelle noch auf einfache Weise in die Aufnahme eingeführt und entnommen werden kann, insbesondere innerhalb eines Temperaturfensters von 0 bis 350 °C.

Die jeweilige Verbindung der erfindungsgemäßen Schleusen und weiteren Komponenten ist vorzugsweise hermetisch dicht. Eine hermetisch dichte Verbindung kann erreicht werden, wenn die aufeinandertreffenden Oberflächen zur Ausbildung der Verbindung vorzugsweise jeweils plane Oberflächen sind, jeweils kongruent sind und/oder aus einem elastischen Material gebildet sind und dicht aneinander anliegen und/oder mit einem Dichtstoff versehen sind.

Ferner ist nach einer Ausführungsform bevorzugt, wenn die Vorrichtung umfasst, mindestens eine Schleuse, die ausgebildet ist als hermetisch abdichtbare Schleuse und/oder hermetisch dichte Schleuse, insbesondere
i) für die Einstellung und/oder Regelung der Atmosphäre im Hohlraum, insbesondere wobei die mindestens eine Schleuse umfasst mindestens einen Atmosphären-Anschluss, insbesondere mindestens zwei Atmosphären-Anschlüsse, und/oder
ii) für die Zuführung von Infiltrat in den Einfüllbereich der mindestens einen Elektrochemischen-Zelle. Die Zuführung in den Einfüllbereich, insbesondere in den Kathodenraum, erfolgt vorzugsweise mittels einer Schleuse umfassend einen Überführbereich und/oder eine untere Öffnung und/oder eine obere Öffnung. Die obere Öffnung ist vorzugsweise mittels eines Verschlusses oder einer aufgesetzten weiteren Schleuse hermetisch verschlossen. Des Weiteren ist es bevorzugt, wenn der Hohlraum ausgebildet wird innerhalb der mindestens einen Schleuse, insbesondere innerhalb der ersten und/oder zweiten Schleuse, und dem Einfüllbereich der Elektrochemischen-Zelle, insbesondere als hermetisch dichter Hohlraum.

Ferner ist es nach einer weiteren Ausführungsform bevorzugt, wenn die Vorrichtung umfasst, mindestens eine Schleuse, wobei die mindestens eine Schleuse umfasst, mindestens eine umlaufende Seitenwand, mindestens eine untere Öffnung, mindestens eine obere Öffnung und mindestens einen Schleusen-Verschluss, insbesondere eine Mehrzahl an oberen Öffnungen mit einer entsprechenden Anzahl an jeweiligen Schleusen-Verschlüssen, zum hermetischen Verschließen der mindestens einen oberen Öffnung oder der Mehrzahl an oberen Öffnungen. Vorzugsweise umfasst die mindestens eine Schleuse an der mindestens einen unteren Öffnung ein Dichtmittel zum hermetischen Abdichten der Verbindung von oberer Öffnung der Aufnahme der Elektrochemischen-Zelle und/oder zum Abdichten der Verbindung mit dem 3D-Formkörper, der Heizvorrichtung und/oder dem Gehäuse.

Die mindestens eine Schleuse, wie erste, zweite oder weitere Schleuse, kann an ihrer jeweiligen Oberseite eine obere Wand mit umlaufender Seitenwand aufweisen, wobei die obere Öffnung der mindestens einen Schleuse in der jeweiligen Wand der Oberseite angeordnet sein kann, oder die obere Öffnung der Schleuse kann unterhalb der Oberseite und der oberen Wand mit umlaufender Seitenwand im mittleren Bereich im Innern der Schleuse angeordnet sein. Eine obere Öffnung kann auch mittels eines Stopfens oder Deckels, wie eines schwenkbaren Deckels reversibel hermetisch verschlossen oder geöffnet werden.

Nach einer weiteren Ausführungsform kann die Vorrichtung mindestens eine Schleuse mit mindestens einem Atmosphären-Anschluss, insbesondere mindestens einen Atmosphären-Anschluss zur Einstellung und/oder Regelung der Zufuhr und/oder dem Entfernen von Atmosphäre, umfassen. In bevorzugten Ausführungsformen kann die mindestens eine Schleuse zwei bis mehrere Atmosphären-Anschlüsse aufweisen, insbesondere um eine modifizierte Atmosphäre im gebildeten Hohlraum auszubilden und eine Strömungsrichtung und Strömungsgeschwindigkeit der Atmosphäre im Hohlraum einzustellen.

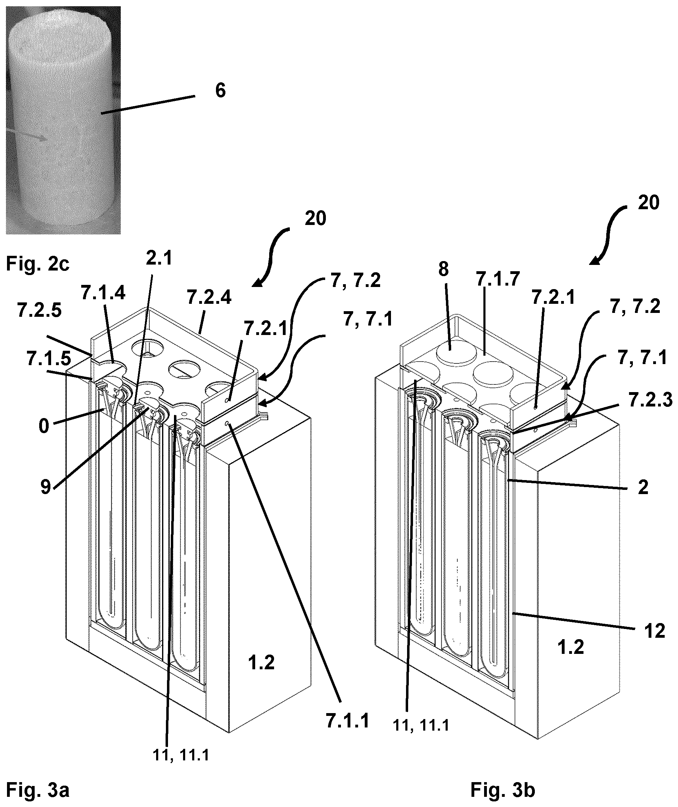

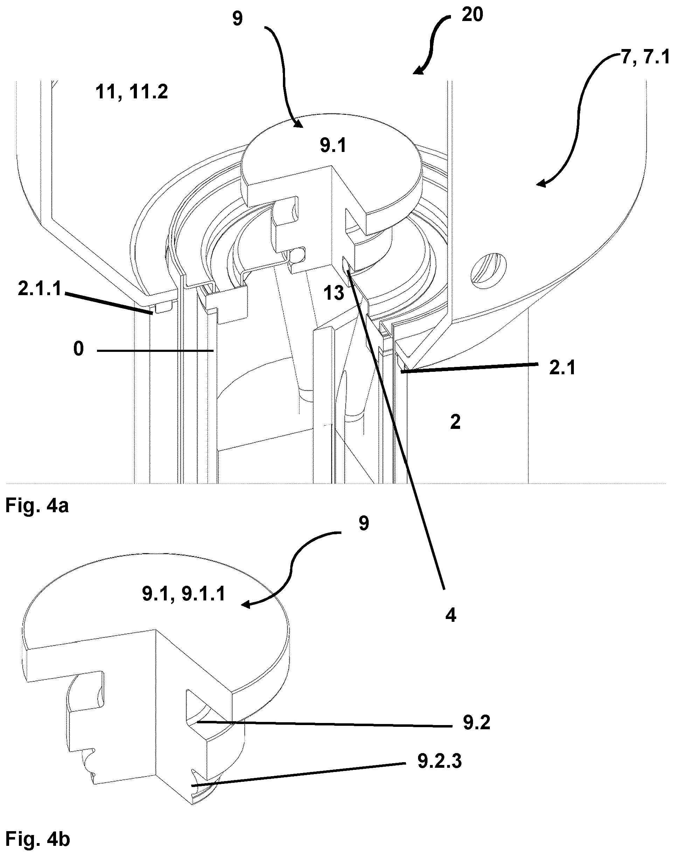

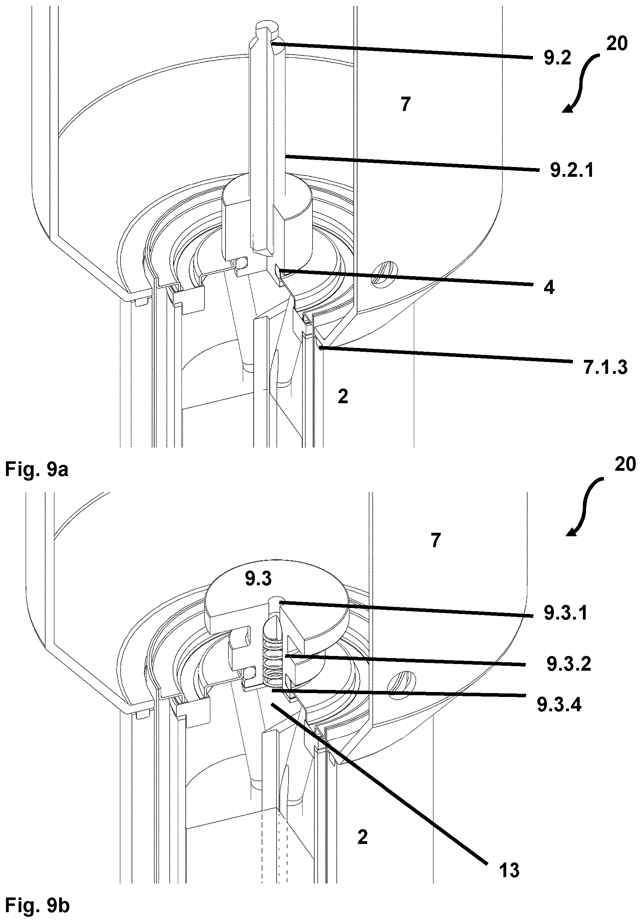

Als eine Atmosphäre, insbesondere modifizierte Atmosphäre, wird vorzugsweise eine Atmosphäre im Hohlraum angesehen, in der der Druck, insbesondere ein Vakuum, definiert eingestellt ist und/oder die Zusammensetzung der Atmosphäre, insbesondere der Gase, Gasmischung, vorzugsweise umfassend mindestens ein Inertgas, und/oder der Gehalt an Feuchte und/oder Wasser, vorzugsweise eine getrocknete Atmosphäre eingestellt werden kann. Die Atmosphäre ist vorzugsweise absolut trocken. Insbesondere soll die Feuchte und/oder Wassergehalt kleiner gleich 0,1 Gew.-% bei ca. zwischen 100 bis 350 °C aufweisen. Nach einer Alternative ist Gegenstand der Erfindung eine Vorrichtung, in der i) ein hermetisch dichter Hohlraum ausgebildet wird durch Verbinden der unteren Öffnung der mindestens einen Schleuse, wobei die Schleuse optional mindestens einen Atmosphären-Anschluss aufweist, mit der oberen Öffnung einer weiteren Schleuse (Fig. 10),
mit dem Einfüllbereich (10) der Elektrochemischen-Zelle (0) (s. Fig. 3a, 3b, 5, 6) oder mit der oberen Öffnung (2.2) der Aufnahme der Elektrochemischen Zelle (0), wie in Figur 4a, 5, 6, 8c, 8d, 9a und/oder 9b dargestellt. Alternativ oder zusätzlich wird ein ii) ein hermetisch dichter Hohlraum (13) ausgebildet durch Verschließen des Einfüllbereiches (10) der Elektrochemischen-Zelle (0) mit i) dem Verschlussmittel (9, 9.1, 9.2), wie in Fig. 3a, 3b, 4a, 4b, 4c, 9a und/oder, 9b, oder dem Verschlussmittel mit Ventil (9.3), wie in Figur 9b dargestellt, wobei der Hohlraum (13) ausgebildet wird im Kathodenraum mit kathodenseitigem Stromabnehmer der Elektrochemischen-Zelle (0) und unterhalb des hermetisch dicht mit dem Einfüllbereich (10) der Elektrochemischen-Zelle (0) verbundenen Verschlussmittels (9, 9.1, 9.2) oder des Verschlussmittels mit Ventil (9.3).

Ebenso Gegenstand der Erfindung ist eine Vorrichtung umfassend i) mindestens eine erste Schleuse (7.1) umfassend mindestens eine untere Öffnung (7.1.5), eine obere Öffnung (7.1.4) und optional mindestens ein Dichtmittel (7.1.3) der ersten Schleuse, Fig. 10, und optional mindestens einen ersten Atmosphären-Anschluss (7.1.1), insbesondere einen ersten Atmosphären-Anschluss zur Einstellung und/oder Regelung der Zufuhr und/oder dem Entfernen von Atmosphäre, insbesondere zur Einstellung eines Vakuums, und/oder
ii) mindestens eine zweite Schleuse (7.2) umfassend mindestens eine untere Öffnung (7.2.5), eine obere Öffnung (7.2.4) und optional mindestens ein Dichtmittel der zweiten Schleuse (7.2.3) und optional mindestens einen zweiten Atmosphären-Anschluss (7.2.1), insbesondere einen ersten Atmosphären-Anschluss zur Einstellung und/oder Regelung der Zufuhr und/oder dem Entfernen von Atmosphäre, insbesondere zur Einstellung eines Vakuums, wobei insbesondere die erste oder zweite Schleuse in der jeweils anderen Schleuse anordbar ist oder die erste und zweite Schleuse aufeinander anordbar sind und jede Schleuse einen unabhängig hermetisch abdichtbaren Hohlraum, insbesondere ersten Hohlraum und/oder zweiten Hohlraum, ausbildet und die erste und zweite Schleuse gemeinsamen ausbildbaren und einen hermetisch abdichtbaren Hohlraum ausbilden. Anordbar hat die Bedeutung von kann angeordnet werden und ist angeordnet.

Ein Verschlussmittel kann auf der der Kathode abgewandten Seite ein Positioniermittel aufweisen. Das Positioniermittel umfasst vorzugsweise eine Hinterschneidung bzw. für einen Greifer. Das Positioniermittel kann eine übliche Schnellkupplung umfassen.

Ferner ist Gegenstand der Erfindung eine Vorrichtung umfassend eine i) Einstellung und/oder Regelung der Atmosphäre im Hohlraum (11) umfassend die mindestens eine Schleuse (7, 7.1, 7,2) mit mindestens einem Atmosphären-Anschluss (7.1.1, 7.2.1) und/oder ii) die Einstellung und/oder Regelung der Atmosphäre im Hohlraum (13) des Kathodenraumes mit kathodenseitigem Stromabnehmer der Elektrochemischen-Zelle (0) unterhalb eines hermetisch dicht mit dem Einfüllbereich der Elektrochemischen-Zelle (0) verbundenen Verschlussmittels mit Ventil (9.3) erfolgt, insbesondere durch
- Zuführen von Inertgasen über den mindestens einen Atmosphären-Anschluss (7.1.1, 7.2.1), der mindestens einen Schleuse oder über das Ventil (9.3.2) des Verschlussmittels (9.3) und/oder
- ein Entfernen, wie Abführen, von Gas oder Gasgemischen, insbesondere aus der vorhandenen Atmosphäre, mittels einer Vakuumpumpe über den mindestens einen Atmosphären-Anschluss der mindestens einen Schleuse (7, 7.1, 7.2) oder über das Ventil (9.3.2) des Verschlussmittels (9.3).

Dabei ist es besonders bevorzugt, wenn die Atmosphäre, insbesondere in einem Prozessschritt in dem das Infiltrat in den Kathodenraum überführt werden soll, frei von Feuchte und/oder Wasser ist, bevorzugt gilt als frei von Feuchte und/oder Wasser eine Atmosphäre mit einem Gehalt an Feuchte und/oder Wasser kleiner gleich 0,01 Gew.-% bei 100 bis 305 °C. Die Atmosphäre kann in einer Ausführungsform beim Einfüllen der Kathode in die Elektrochemische Zelle noch Feuchte aufweisen. In diesem Fall wird die Kathode und/oder die Elektrochemische-Zell hermetisch, insbesondere mit mindestens einer Schleuse, verschlossen und durch Anlegen von Vakuum und/oder Erhöhen der Temperatur die Feuchtigkeit aus der Kathode und/oder der Elektrochemischen-Zelle entfernt. In allen nachfolgenden Prozessschritten, wie dem Einfüllen des Infiltrates, insbesondere eine Salzschmelze, und optional dem Aufsetzen des Kathodenverschlusses und dem anschließenden Laserverschweißen des Kathodenverschlusses verbleibt die Zelle vorzugsweise unter einer definierten Atmosphäre, insbesondere eine Atmosphäre, die frei von Feuchtigkeit ist, bevorzugt unter Inertgas-Atmosphäre, besonders bevorzugt unter einer Intergasatmosphäre frei von Feuchtigkeit.

Alternativ kann eine Atmosphäre mit einem Unterdruck eingestellt werden, insbesondere für das Befüllen mit Infiltrat, bevorzugt mit einem Vakuum von kleiner gleich 650 mbar, insbesondere kleiner gleich 250 mbar, besonders bevorzugt von kleiner gleich 1 mbar, bevorzugt kleiner gleich 0,1 mbar, hermetisch dichten Kathodenverschlusses, insbesondere am Einfüllbereich der Kathode, der mindestens einen Elektrochemischen-Zelle.

Gegenstand der Erfindung ist auch ein System umfassend eine Aufnahme und/oder eine Vorrichtung, insbesondere mit mindestens einem Verschluss, bevorzugt umfassend mindestens ein Laserglas oder eine Mehrzahl an Lasergläsern,
wobei das System umfasst eine Laser-Schweißeinheit, insbesondere mit einer Optik mit Tiefenschärfekorrektur für die Einstellung des Laser-Fokus, insbesondere zur Einstellung der Fokuspositionierung des Lasers der Laser-Schweißeinheit beim Schweißen, besonders bevorzugt beim Schweißen des Kathodenverschlusses des Einfüllbereiches der Elektrochemischen-Zelle der Kathode. Besonders bevorzugt ist eine Laser-Schweißeinheit zur automatischen Tiefenschärfe-Korrektur des Laser-Fokus der Laser-Schweißeinheit.

Gleichfalls Gegenstand der Erfindung ist ein Verschlussmittel zum Verschließen des kathodenseitigen Bereiches der Elektrochemischen-Zelle, wobei das Verschlussmittel umfasst im unteren kathodenseitigen Bereich mindestens eine umlaufende Hinterschneidung, insbesondere mindestens eine umlaufende Nut, bevorzugt mit Dichtmittel , oder einen umlaufenden mit dem Verschlussmittel materialeinstückig ausgebildeten Wulst als Dichtmittel und optional einen oberen gegenüber des kathodenseitigen Bereiches liegenden Bereich mit einem Positioniermittel zum Positionieren des Verschlussmittels. Das Positioniermittel dient vorzugsweise einem Positionieren, wie Einsetzen oder Herausnehmen des Verschlussmittels zum Verschließen des kathodenseitigen Einfüllbereiches der Elektrochemischen-Zelle oder zum Öffnen des kathodenseitigen Einfüllbereiches der Elektrochemischen-Zelle. Das Positioniermittel kann in Form eines Stabes, eines T-Förmigen Griffes und/oder eines innen holen Stabes optional mit Rastfunktion vorliegen. Dabei kann es weiter bevorzugt sein, wenn das Positioniermittel und ein Greifer eine Schnellkupplung ausbilden, diese kann manuell oder automatisch gesteuert sein.

Nach einer weiteren Alternative ist Gegenstand der Erfindung ein Verschlussmittel umfassend ein Ventil, insbesondere um den unteren kathodenseitigen Bereich des Verschlussmittels mit dem oberen gegenüber des kathodenseitigen Bereiches liegenden Bereich oder einen außerhalb des kathodenseitigen Bereiches des Verschlussmittels liegenden Bereiches des Verschlussmittels mit der äußeren Oberfläche des Verschlussmittels reversibel hermetisch dicht oder offen für einen Austausch und/oder eine Einstellung der Atmosphäre außerhalb des kathodenseitigen Bereiches der Elektrochemischen-Zelle, insbesondere außerhalb des Einfüllbereiches der Elektrochemischen-Zelle, vorzugsweise außerhalb der Einfüllöffnung der Elektrochemischen-Zelle, mit der Atmosphäre in der Elektrochemischen-Zelle, insbesondere mit dem kathodenseitigen Einfüllbereich der Elektrochemischen-Zelle, einstellbar und/oder hermetisch verschließbar auszubilden, bevorzugt zur Einstellung einer definierten Atmosphäre in der Elektrochemischen-Zelle. Das Ventil kann ein Kugelventil, ein Kugelhahnventil oder ein dem Fachmann bekanntes Ventil sein.

Ebenfalls Gegenstand der Erfindung ist ein Verschlussmittel, wobei das Verschlussmittel ein Ventil aufweisen kann, insbesondere um den unteren kathodenseitigen Bereich des Verschlussmittels, insbesondere unterer kathodenseitiger Bereich mit Öffnung, mit dem oberen gegenüber des kathodenseitigen Bereiches liegenden Bereich oder einen außerhalb des kathodenseitigen Bereiches des Verschlussmittels liegenden Bereiches des Verschlussmittels mit der äußeren Oberfläche des Verschlussmittels reversibel hermetisch dicht oder offen für einen Austausch und/oder eine Einstellung der Atmosphäre außerhalb des kathodenseitigen Bereiches der Elektrochemischen-Zelle mit der Atmosphäre in der Elektrochemischen-Zelle, einstellbar und/oder hermetisch verschließbar auszubilden, insbesondere den oberen Bereich des Verschlussmittels mit Öffnung, bevorzugt ist der obere Bereich des Verschlussmittels mit Öffnung und der untere Bereich des Verschlussmittels mit Öffnung über ein Ventil verbunden.

Die hermetischen Schleusen und/oder Verschlussmittel dienen erfindungsgemäß der definierten Einstellung und/oder Regelung der Atmosphäre, der Zuführung von Inertgas, insbesondere Inertgas frei von Feuchte, der Einstellung des Druckes, insbesondere eines Vakuums, vorzugsweise eines Vakuum von kleiner gleich 600 mbar.

Ferner ist Gegenstand der Erfindung ein Kit umfassend mindestens eine Aufnahme und mit mindestens einer Schleuse, deren untere Öffnung mit dem Einfüllbereich einer Elektrochemischen-Zelle verbunden ist, insbesondere einer ersten Schleuse mit unterer Öffnung der ersten Schleuse und/oder einer zweiten Schleuse mit unterer Öffnung der zweiten Schleuse, oder einer Überführeinheit mit Zuführung, die mit dem Einfüllbereich der Elektrochemischen-Zelle verbunden ist, wobei insbesondere jeweils unabhängig ein hermetisch dichter Hohlraum ausgebildet ist, besonders bevorzugt für den Austausch und/oder die Einstellung der Atmosphäre im Hohlraum. Liegen mehrere Schleusen, insbesondere gekoppelt vor, so können mehrere hermetische Hohlräume ausgebildet und eingestellt werden. Gleichfalls Gegenstand der Erfindung ist eine Kit umfassend eine Atmosphäre in mindestens einem Hohlraum, insbesondere in einer Schleuse oder im Kathodenraum, die im Wesentlichen frei von Feuchte und/oder Wasser ist. Besonders bevorzugt umfasst der Hohlraum ein Vakuum.

Ebenso Gegenstand der Erfindung ist ein Kit umfassend mindestens eine Elektrochemische-Zelle mit je einem Verschlussmittel, wobei das Verschlussmittel mit dem Einfüllbereich der Elektrochemischen-Zelle verbindbar oder verbunden ist, insbesondere umfassend jeweils unabhängig einen hermetisch dichten Hohlraum umfassend den Kathodenraum mit kathodenseitigem Stromabnehmer der Elektrochemischen-Zelle. Besonders bevorzugt ist ein Verschlussmittel mit Ventil für den Austausch und/oder die Einstellung der Atmosphäre im Hohlraum, insbesondere im Kathodenraum. Dabei ist ein Kit bevorzugt, dass umfasst eine Atmosphäre im Hohlraum, die im Wesentlichen frei von Feuchte und/oder Wasser ist. Vorzugsweise liegt im Hohlraum ein Vakuum vor.

Unter hermetisch synonym zu gasdicht oder hermetisch dicht oder hermetisch abgedichtet, wie einem hermetischen Verschluss oder einem hermetischen Hohlraum, insbesondere erfindungsgemäß einem hermetisch dichten Hohlraum, wird vorliegend ein absolut dichter, insbesondere einen Austausch von Atmosphäre, wie Gas(en) und/oder Feuchtigkeit, verhindernder Abschluss, insbesondere eines Hohlraumes und/oder einer Verbindung, verstanden. Hermetisch bedeutet vorzugsweise kein Austausch von Atmosphäre.

Die nachfolgenden Figuren stellen dar, ohne die Erfindung auf die genannten konkreten Ausführungsformen zu beschränken.

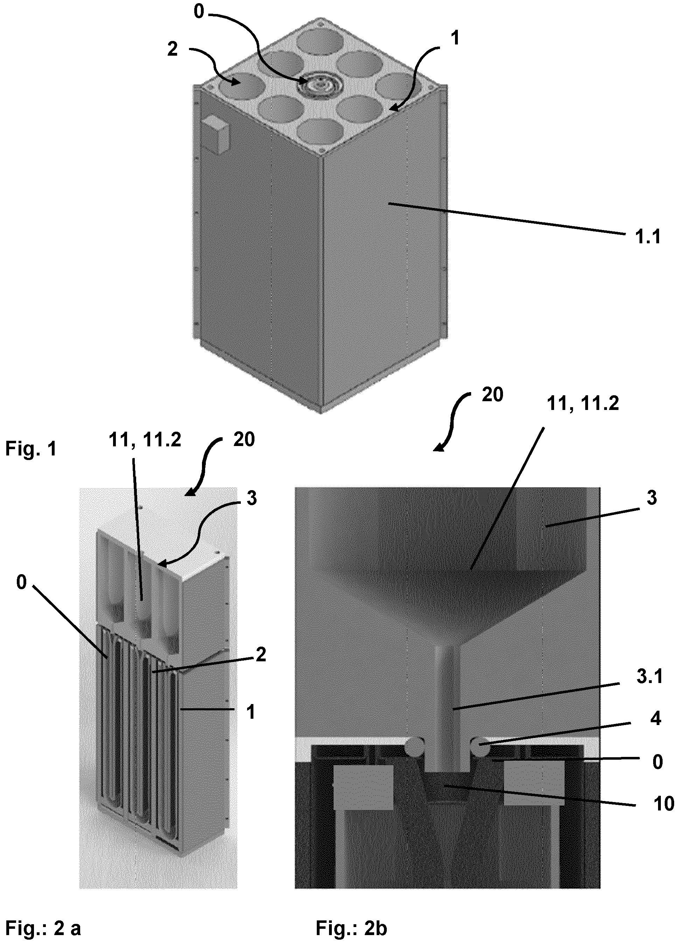

**Figur 1** eine Heizvorrichtung (1) umfassend eine Vielzahl an Aufnahmen (2), wobei in eine Aufnahme (2) eine Elektrochemische Zelle (0) eingesetzt ist. Die Heizvorrichtung (1) ist von einem Gehäuse (1.1) zur Aufnahme der Heizvorrichtung umgeben. Die **Figuren 3a** und **3b** zeigen zusätzliche Isoliervorrichtungen (1.2).

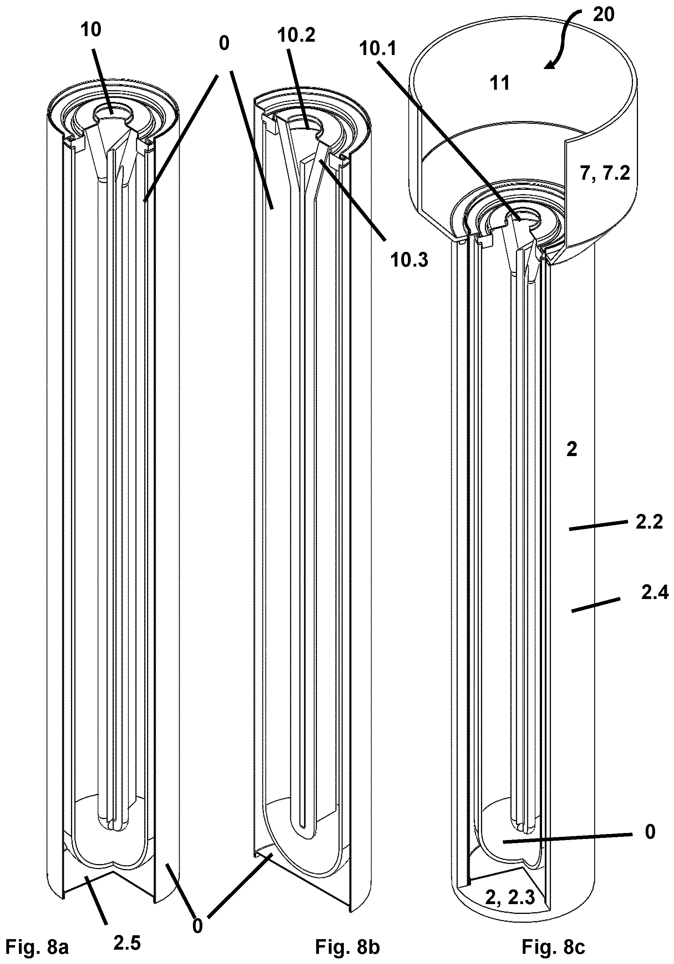

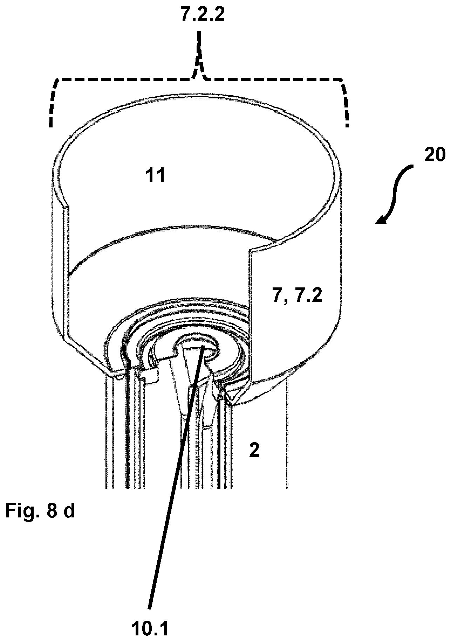

**Figuren 2a** und **2b** stellen dar eine Vorrichtung (20) umfassend eine Überführeinheit (3) mit Zuführung (3.1) in die Elektrochemische-Zelle (0) in einer Aufnahme (2). Die Zuführung ist mit außen anliegendem Dichtmittel (4) am inneren Einfüllbereich (10) (**Fig. 8a**) hermetisch dicht verschlossen. Ebenfalls ist eine Heizvorrichtung (1) dargestellt. **Figur 2c** stellt dar ein Infiltrat (6) in Form einer erstarrten Salzschmelze. Die Salzschmelze kann geschmolzen oder als feste Schmelze in die Überführeinheit (3), Fig. 2a, eingeführt werden. **Figuren 2a** und **2b** zeigen den Hohlraum (11, 11.2)

**Figuren 3a** und **3b** zeigen eine Vorrichtung (20) - in Schnittdarstellung - einer gestapelten Anordnung von ersten Schleuse (7, 7.1) und zweiter Schleuse (7, 7.2), jeweils mit ersten und zweiten Atmosphären-Anschlüssen (7.1.1, 7.2.1). Es sind eine Vielzahl an Elektrochemischen-Zellen (0) in einer Vielzahl an Aufnahmen (2) mit oberer Öffnung (2.2) angeordnet. Einige Zellen (0) verfügen über Verschlussmittel (9). Die erste und zweite Schleuse (7, 7.1, 7.2) verfügen über eine jeweilige untere Öffnungen (7.1.5, 7.2.5), (**Fig. 5****,** **10**) und obere Öffnungen (7.1.4, 7.2.4). Ferner ist eine Isoliervorrichtung (1.2) als auch Heizmittel (12) dargestellt. Einige obere Öffnungen sind mit Schleusen-Verschlussmitteln (8) hermetisch verschlossen. Innerhalb der Schleuse ist ein hermetischer Hohlraum (11, 11.1) ausbildbar. Eine Schleuse, insbesondere die erste Schleuse, verfügt über eine Wand (7.1.7) an der Oberseite der Schleuse. Zwischen den beiden Schleusen ist ein Dichtmittel angeordnet, insbesondere ein Dichtmittel der zweiten Schleuse (7.2.3), welches vorzugsweise unten an der zweiten Schleuse festgelegt ist, s. auch **Fig. 10****.**

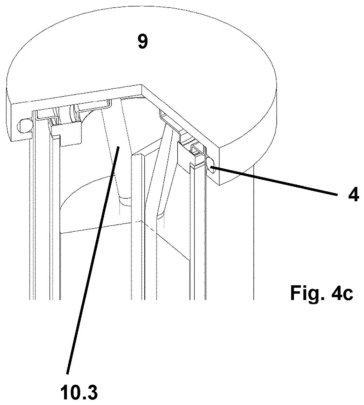

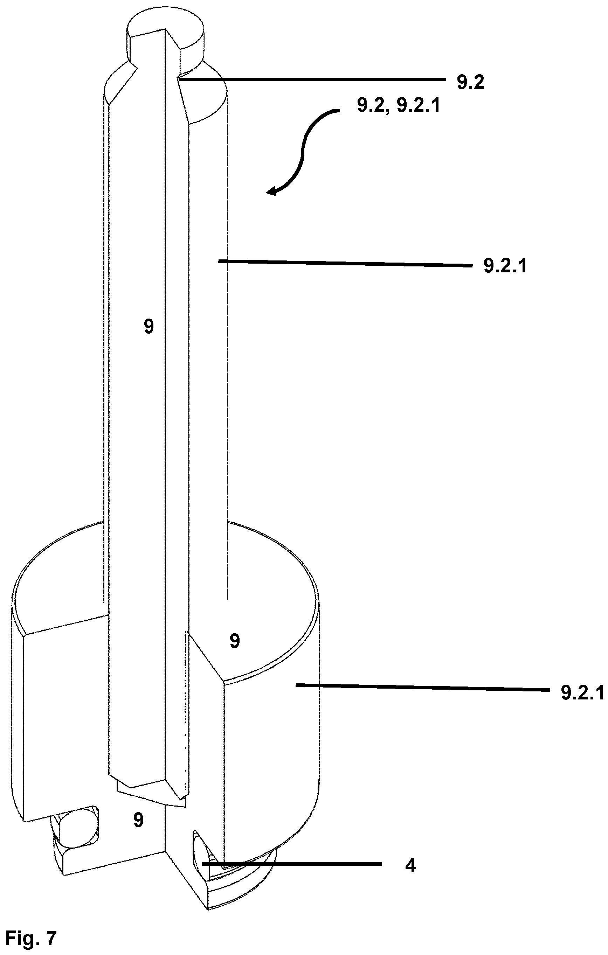

Die **Figuren 4a** und **4b** zeigen zwei unterschiedliche Verschlussmittel (9) mit Hinterschneidung (9.2) mit Dichtung (4) oder Wulst (9.2.3) und oberem Bereich des Verschlussmittels (9.1), insbesondere mit Positioniermittel (9.1.1), welches vorzugsweise Hinterschneidungen aufweist. Es wird ein hermetisch dichter Hohlraum (13) (synonym zu hermetischer Hohlraum) im Kathodenraum der Zelle (0) gebildet. Die Schleuse (7, 7.1) - ist in Schnittdarstellung dargestellt - und kann einen hermetisch dichten Hohlraum (11, 11.2, (synonym zu hermetischer Hohlraum)) in der Vorrichtung (20) ausbilden. Des Weiteren zeigt die Figur 4a die Anschlussgeometrie (2.1.1) der oberen Öffnung der Aufnahme der Elektrochemischen Zelle (0), die in die Aufnahme (2) mit oberer Öffnung (2.1) eingesetzt ist. **Figur 4c** zeigt einen Schleusenverschluss (9) mit Dichtmittel (4) zum hermetischen Verschließen einer Elektrochemischen-Zelle (0) in einer Aufnahme (2). Ein analoger Verschluss kann auch zum Verschließen einer Zelle (0) bei Ausbildung eines haubenförmigen Verschlussmittels verwendet werden. In **Figur 4c****,** kann das Dichtmittel (4) vorzugsweise innen umlaufend in einem äußeren Rand des deckelförmigen Schleusenverschlusses (9) oder auch als Dichtmittel (4) am äußeren Umfang der Zelle (0) umfassend einen kathodenseitigen Stromabnehmer (10.3) oder am äußeren Umfang der Aufnahme (2) ausgebildet sein. **Figuren 5****,** **6****,** **7****,** **8a, 8b, 8c****,** **8d****,** **9a** und **9b** stellen dar eine Vorrichtung (20) mit Überführbereich (7.1.2) der ersten Schleuse (7, 7.1) und Überführbereich (7.2.2) der zweiten Schleuse (7, 7.2). Ferner ist dargestellt der Einfüllbereich (10) der Elektrochemischen-Zelle (0), insbesondere der kathodenseitige Einfüllbereich (10.1), hier bevorzugt der Einfüllbereich (10.2) des kathodenseitigen Stromabnehmers (10.3), der mit dem Hohlraum (11) kommuniziert. Es werden in der ersten und zweiten Schleuse die hermetischen Hohlräume (11, 11.1 und 11.2) ausgebildet. Die Zuführung des Infiltrates kann beispielsweise über die zweite Schleuse (7.2) über einen Überführbereich (7.2.2) in den Kathodenraum der Zelle (0) erfolgen. Die Schleusen sind mit Dichtmitteln (7.1.3) und (7.2.3), s. (**Fig. 10**) gegenüber der Aufnahme (2) oder anderen Komponenten abgedichtet. In den Figuren 8a bis 8c sind die innere Oberfläche (2.3) der Aufnahme (2), die Seitenwand (2.4) mit äußerer Oberfläche (2.2) der Aufnahme (2) sowie der Boden (2.5) der Aufnahme dargestellt. Auch wenn in einigen Figuren die Schleusen und andere Bauteile in Schnittdarstellung eingezeichnet sind, weiß der Fachmann, dass die Schleusen und andere Bauteile hermetisch dicht sein können. Die Figuren stellen zudem dar die Seitenwände der Schleusen (7.1.6, 7.2.6), die oberen und unteren Öffnungen der Schleusen (7.1.4, 7.2.4, 7.1.5 und 7.2.5, **Fig. 3a****,** **Fig. 10**), ein Atmosphären-Anschluss (7.1.1) sowie eine Wand (7.1.7, 7.2.7), s. **Fig. 10**) auf der Oberseite der Schleuse (7.2), s. **Figur 10****.** **Figuren 4a****,** **4b****,** **4c****,** **7****,** **9a** und **9b** stellen insbesondere zusätzlich dar unterschiedliche Ausführungsformen von Verschlussmitteln (9), insbesondere Verschlussmittel mit Hinterschneidung (9.2) und/oder Verschlussmittel (9) mit Positioniermittel (9.2.1) oder Verschlussmittel (9), wie mit Ventil (9.3.2), wie Kugelventil, elastische Verschlussmittel (9.2.1), insbesondere mit Dichtmittel (4). Das Verschlussmittel (9) kann ein Dichtmittel (4) aufweisen. Sowie mit Öffnung im oberem Bereich (9.3.1) des Verschlussmittels (9.3) und Öffnung im unterem Bereich (9.3.2). **Figur 9b** stellt dar den unteren Bereich des Verschlussmittels mit Öffnung (9.3.4) als auch den Hohlraum (13), s.a. Fig. 10, im Kathodenraum, insbesondere unterhalb des Verschlussmittels (9.3).

**Figur 10** stellt dar eine Anordnung mit zwei Schleusen und einem Verschlussmittel (9) mit Dichtmittel (4). Die erste Schleuse (7.1) mit Atmosphären-Anschluss (7.1.1) und mehrteiligem Schleusenverschluss (8.1.1, 8.1.2) kann innerhalb des Hohlraumes durch Anlegen von Vakuum an der Atmosphären-Leitung (15) mittels Vakuum angehoben werden. Wird die Leitung seitlich gedreht, kann eine obere Öffnung in der ersten Schleuse erhalten werden. Durch diese Öffnung kann eine Greifvorrichtung (14) nach unten geführt werden, um das Positioniermittel (9.2.1) zu greifen und das Verschlussmittel aus dem Einfüllbereich der Elektrochemischen-Zelle zu entfernen. Die Greifvorrichtung (14) kann ein Dichtmittel (14.1) sowie ein stabförmiges Positioniermittel (14.2) aufweisen.

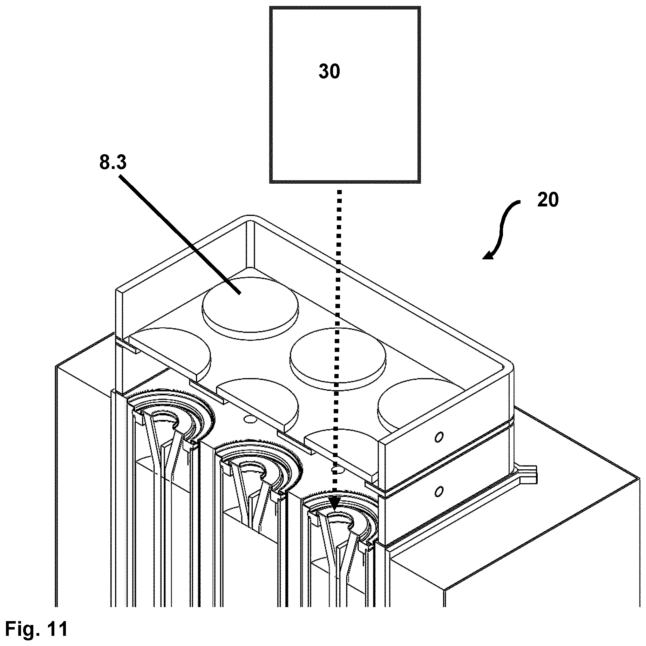

Alle Bauteile sind vorzugsweise abgedichtet und hermetisch gegenüber der äußeren Atmosphäre abgedichtet. In der zweiten Schleuse (7.2) kann ein Werkzeugwechsel erfolgen. In weiteren Alternativen kann ein Verschlussmechanismus auch in einem Bereich der Seitenwand einer Schleuse, über eine obere oder untere Öffnung erfolgen. Die Schleusen können je nach Zelle oder Verfahren eine individuelle Dimensionierung/ Auslegung aufweisen. Der Greifer kann mittels einer Vielzahl von Aktoren, wie mechanische, pneumatischen Aktoren angetrieben werden. oder ein Öffnen von Schleusen-Verschlüssen (8), s. **Fig. 3b****,** kann mittels einer Vielzahl von mechanischen, pneumatischen und evtl. auch elektrischen Öffnungs- und Schließmechanismen erfolgen. Die Schleusen weisen vorteilhaft zueinander Dichtungen auf. Die Schleusen können mittels eines definierten Anpressdrucks, der nicht dargestellt ist, hermetisch verschlossen werden. Alternativ kann aber auch eine Kraft von oben auf die Dichtungen einwirken, die ein hermetisches Verschließen ermöglichen. **Figur 11** stellt schematisch dar, eine Laserschweißeinheit (30), die durch ein Laserglas (8.3) in der zweiten Schleuse von erster Schleuse und zweiter Schleuse einen Kathodenverschluss mittels Laserschweißnaht hermetisch dicht verschweißt.

### Bezugszeichen:

- **0**: Elektrochemische-Zelle
- **1**: Heizvorrichtung, insbesondere Heizblock, bevorzugt ein- bis mehrteiliger massiver Heizblock, bevorzugt materialeinstückiger Heizblock, mit mindestens einer Aufnahme Elektrochemische Zelle (0),
- **1.1**: Gehäuse zur Aufnahme der Heizvorrichtung (1), insbesondere Gehäuse aus Isoliermittel und/oder umfassend Isoliermittel. Isoliermittel kann umfassen eine Doppelwandung mit Vakuum kleiner gleich 0,6 bar. Ein Gehäuse kann umfassen Gehäuseseitenwände und Gehäuseboden, insbesondere jeweils ausgeführt als Doppelwand mit innenliegendem Vakuum kleiner gleich 0,6 bar. Materialien, die als Isoliermittel dienen können, können umfassen geschäumte anorganische Materialien, organische Materialien oder Hybridmaterialien umfassend anorganische und organische Materialien, wie poröse Materialien, partikuläre Materialien, faserhaltige Materialien
- **1.2**: Isoliervorrichtung
- **2**: Aufnahme Elektrochemische Zelle (0)
- **2.1**: obere Öffnung der Aufnahme Elektrochemische Zelle (0)
- **2.1.1**: Anschlussgeometrie der oberen Öffnung der Aufnahme Elektrochemische Zelle (0)
- **2.2**: äußere Oberfläche Aufnahme (2)
- **2.3**: innere Oberfläche Aufnahme (2)
- **2.4**: Seitenwand der Aufnahme (2), insbesondere Seitenwand mit Boden, die die Aufnahme ausbilden, insbesondere bilden eine umlaufende Seitenwand mit Boden und oberer Öffnung die Aufnahme (2) mit innerer Oberfläche aus. Die Aufnahme kann hermetisch mit Schleuse verschlossen werden.
- **2.5**: Boden der Aufnahme (2)
- **3**: Überführeinheit
- **3.1**: Zuführung Elektrochemische-Zelle (0), insbesondere Zuführung zur Verbindung mit (10) Einfüllbereich Elektrochemische-Zelle (0), insbesondere kathodenseitiger Einfüllbereich (10.1), bevorzugt Einfüllbereich kathodenseitiger Stromabnehmer (10.2)
- **4**: Dichtmittel
- **6**: Infiltrat, insbesondere Salzschmelze
- **7**: Schleuse(n), insbesondere Atmosphärenschleuse(n), bevorzugt Schleuse(n) mit thermischer Isolierung (Isoliermittel umfassend Doppelwandung mit innenanliegendem Vakuum, vorzugsweise kleiner 600 mbar, insbesondere kleiner 0,01 mbar, und/oder Materialien, die als Isoliermittel dienen wie, geschäumte anorganische Materialien, organische Materialien oder Hybridmaterialien umfassend anorganische und organische Materialien, wie poröse Materialien, partikuläre Materialien, faserhaltige Materialien.
- **7.1**: erste Schleuse, insbesondere erste Atmosphärenschleuse
- **7.1.1**: Atmosphären-Anschluss erste Schleuse, insbesondere mit erster Anschlussgeometrie
- **7.1.2**: Überführbereich erste Schleuse
- **7.1.3**: Dichtmittel erste Schleuse
- **7.1.4**: obere Öffnung der Schleuse, insbesondere der ersten Schleuse
- **7.1.5**: untere Öffnung der Schleuse, insbesondere der ersten Schleuse
- **7.1.6**: Seitenwand der Schleuse, insbesondere der ersten Schleuse
- **7.1.7**: Wand Oberseite Schleuse
- **7.2**: zweite Schleuse, insbesondere zweite Atmosphärenschleuse
- **7.2.1**: Atmosphären-Anschluss zweite Schleuse, insbesondere mit zweiter Anschlussgeometrie
- **7.2.2**: Überführbereich zweite Schleuse
- **7.2.3**: Dichtmittel zweite Schleuse
- **7.2.4**: obere Öffnung der Schleuse, insbesondere der zweiten Schleuse
- **7.2.5**: untere Öffnung der Schleuse, insbesondere der zweiten Schleuse
- **7.2.6**: Seitenwand der Schleuse, insbesondere der zweiten Schleuse
- **7.2.7**: Wand Oberseite zweite Schleuse
- **8**: Schleusen-Verschluss, insbesondere mindestens ein erster Verschluss (8.1) der ersten Schleuse, wie mehrteiliger Verschluss (8.1.1, 8.1.2) der ersten Schleuse, und/oder mindestens ein zweiter Verschluss der zweiten Schleuse (8.2), insbesondere mehrteiliger Verschluss (8.2.1, 8.2.2) der zweiten Schleuse (7.2)
- **8.1**: erster Verschluss der ersten Schleuse (7.1), insbesondere als mehrteiliger erster Verschluss **(8.1.1, 8.1.2)**
- **8.2**: zweiter Verschluss der zweiten Schleuse (7.2), insbesondere als mehrteiliger zweiter Verschluss **(8.2.1, 8.2.2)**
- **8.3**: Laserglas als Verschluss (8) und/oder Bestandteil in erster und/oder zweiter Schleuse (7) oder in einer dritten Schleuse, Laserglas in definiertem Abstand zum Einfüllbereich der Elektrochemischen-Zelle (10), insbesondere in definiertem Abstand zum kathodenseitigen Einfüllbereich (10.1), besonders bevorzugt in definiertem Abstand zum kathodenseitigen Stromabnehmer (10.3),
- **9**: Material: Laserglas (8), insbesondere Quarzglas, Silikatglas, Borsilikatglas, Laserglas umfassend mindestens ein Seltenerdmetall(e) und/oder Ionen mindestens eines der Seltenerdmetall(e), wie Erbium, Neodym und/oder Ytterbium; und/oder Hybridgläser umfassten Quarzglas und/oder Borsilikatglas im Gemisch mit Polymeren Verschlussmittel Elektrochemische-Zelle (0), insbesondere des Einfüllbereiches (10.1, 10.2) der Elektrochemischen-Zelle, insbesondere Verschlussmittel mit Dichtmittel (4), Verschlussmittel umfasst vorzugsweise einen unteren Bereich mit umlaufender, innenliegender Nut optional umfasst die Nut ein Dichtmittel (4), wie einen O-Ring, und das Verschlussmittel umfasst einen oberen Bereich, der ausgebildet ist mit einem Greifer erfasst zu werden, um das Verschlussmittel (9) insbesondere in den Einfüllbereich (10.1), insbesondere mit Einfüllöffnung (10.2) einsetzbar und/oder herausnehmbar auszubilden, besonders bevorzugt automatisiert, besonders bevorzugt vollautomatisiert und optional mit Atmosphäre, bevorzugt mit modifizierter Atmosphäre, einsetzbar und/oder herausnehmbar auszubilden.
- **9.1**: oberer Bereich des Verschlussmittels, insbesondere Positioniermittel, zum Verschließen des kathodenseitigen Bereiches der Elektrochemischen-Zelle (0), insbesondere des Einfüllbereiches (10.1, 10.2) der Elektrochemischen-Zelle, insbesondere elastisches Verschlussmittel und/oder umfassend ein Dichtmittel (4), Fig. 4
- **9.1.1**: Positioniermittel
- **9.2**: Verschlussmittel, insbesondere Verschlussmittel mit Hinterschneidung, insbesondere mit etwa senkrechten zur Längsmittelachse angeordneter Hinterschneidung, bevorzugt mit mindestens einer Hinterschneidung für die Aufnahme eines Dichtmittels (4) und/oder als Arretierung für die Aufnahme eines Greifers zum Positionieren des Verschlussmittels, mit Positioniermittel (9.2.1), insbesondere Positioniermittel, insbesondere in Stabform (9.2.1), für kathodenseitigen Bereich der Elektrochemischen-Zelle (0), insbesondere des Einfüllbereiches (10.1, 10.2) der Elektrochemischen-Zelle, insbesondere elastisches Verschlussmittel (9.2.2, Fig. 4b) umfassend einen Wulst (9.2.3) als materialeinstückiges Dichtmittel und/oder umfassend ein Dichtmittel (4), Fig. 4a
- **9.2.1**: Positioniermittel, insbesondere in Stabform
- **9.2.3**: Wulst, insbesondere Dichtung mit Wulst
- **9.3**: Verschlussmittel mit Ventil (9.3.2) zum Verschließen des kathodenseitigen Bereiches der Elektrochemischen-Zelle (0), insbesondere des Einfüllbereiches (10.1, 10.2) der Elektrochemischen-Zelle, insbesondere elastisches Verschlussmittel (9.2.1) und/oder umfassend ein Dichtmittel (4), insbesondere ein um das Verschlussmittel umlaufender O-Ring, insbesondere aus fluorierten Polymeren, insbesondere perfluorierte Polymeren, wie FPM, FFPM, Fig. 9b
- **9.3.1**: oberer Bereich des Verschlussmittels mit Öffnung
- **9.3.2**: Ventil
- **9.3.4**: unterer Bereich des Verschlussmittels mit Öffnung
- **10**: Einfüllbereich Elektrochemische-Zelle (0), insbesondere kathodenseitiger Einfüllbereich (10.1), bevorzugt Einfüllbereich kathodenseitiger Stromabnehmer (10.2)
- **10.1**: kathodenseitiger Einfüllbereich,
- **10.2**: Einfüllbereich mit Einfüllöffnung (10.2) kathodenseitiger Stromabnehmer (10.3)
- **10.3**: kathodenseitiger Stromabnehmer
- **11**: Hohlraum, insbesondere hermetisch dichter Hohlraum, zur Einstellung einer modifizierten Atmosphäre in mindestens einer Schleuse, der ersten Schleuse, der zweiten Schleuse, einer dritten oder weiteren Schleuse und/oder in der Überführeinheit,
- **11.1**: Hohlraum, insbesondere hermetisch dichter Hohlraum, zur Einstellung einer modifizierten Atmosphäre in erster Schleuse,
- **11.2**: Hohlraum, insbesondere hermetisch dichter Hohlraum, zur Einstellung einer modifizierten Atmosphäre in Überführeinheit und optional in Schleuse(n), insbesondere zweiter Schleuse
- **12**: Heizmittel, wie Widerstandsheizung, Konvektive, induktive Heizung und/oder Kombinationen
- **13**: Hohlraum (12), insbesondere hermetisch dichter Hohlraum, im Kathodenraum mit kathodenseitigem Stromabnehmer der Elektrochemischen-Zelle (0) unterhalb des Verschlussmittels (9.3) mit Ventil (9.3.2)
- **14**: Greifvorrichtung
- **14.1**: Dichtmittel Greifvorrichtung
- **14.2**: Stabförmiges Positioniermittel Greifvorrichtung
- **15**: Atmosphären-Leitung zur Einstellung Atmosphäre, wie Zuführen von Inertgas und/oder Anlegen von Vakuum, optional kann Vakuum angelegt werden, um Positioniermittel des Verschlusses 9 anzusaugen, um Verschluss (9, 9.2.1) der Elektrochemischen-Zelle mittels Vakuum aus der Einfüllöffnung (10) zu entfernen
- **20**: Vorrichtung zum Befüllen und optional Verschließen von mindestens einer Elektrochemischen-Zelle (0)
- **30**: Laserschweiß-Einheit, insbesondere umfassend mindestens eine Optik, insbesondere zur Einstellung der Tiefenschärfe-Korrektur des Schweißlasers

## Patentansprüche

1. Aufnahme (2) zum Befüllen mindestens einer Elektrochemischen-Zelle (0),
**dadurch gekennzeichnet, dass**
die Aufnahme (2) zur Aufnahme der Elektrochemischen-Zelle (0) ausgebildet ist und eine innere Oberfläche und eine obere Öffnung (2.1) zur Aufnahme der Elektrochemischen-Zelle (0) aufweist, wobei die innere Oberfläche der Aufnahme (2) aus einem gegenüber Chlorid-Ionen beständigem Material ist.

2. Aufnahme (2) nach Anspruch 1, **dadurch gekennzeichnet, dass** das gegenüber Chlorid-Ionen beständige Material gegenüber Chlorid-Ionen bei erhöhter Temperatur beständig ist, insbesondere ist das Material gegenüber Chlorid-Ionen bei einer Temperatur größer gleich 50 °C beständig.

3. Aufnahme (2) nach Anspruch 1 oder 2, **dadurch gekennzeichnet, dass** die Aufnahme (2) an der oberen Öffnung (2.1) eine Anschlussgeometrie (2.1.1) aufweist, insbesondere zur Verbindung mit einer Überführeinheit (3) oder mindestens einer Schleuse, besonders bevorzugt zur hermetisch abdichtbaren Verbindung mit einer Überführeinheit (3), besonders bevorzugt zur reversibel lösbaren, hermetisch abdichtbaren Verbindung mit einer Überführeinheit (3) und/oder mindestens einer Schleuse (7).

4. Aufnahme (2) nach einem der Ansprüche 1 bis 3, **dadurch gekennzeichnet, dass** das gegenüber Chlorid-Ionen beständige Material
i) Nickel umfasst, insbesondere umfasst das Material eine Nickellegierung mit einem Nickelgehalt von größer gleich 30 Gew.-% und optional einem Phosphorgehalt von größer gleich 5 Gew.-% in Bezug auf die Gesamtzusammensetzung von 100 Gew.-% der Nickel-Legierung, oder/und
ii) nicht-rostenden Stahl umfasst, insbesondere nicht-rostenden Stahl a) mit einem definierten Molybdän- und/oder Nickel-Gehalt und/oder b) ferritischen und/oder austenitisch-ferritischem nicht-rostenden Stahl umfasst, und/oder
iii) umfasst Gold, Goldlegierung, Molybdän, Molybdän-Legierung, Keramik, Borsilikatglas, Glaskeramik, insbesondere Emaille, und/oder
iv) eine Chlorid-beständige Zusammensetzung umfasst mindestens ein Polymer umfassend, insbesondere ein fluoriertes Polymer, bevorzugt ein perfluoriertes Polymer, besonders bevorzugt umfassend PTFE (Polytetrafluorethylen), PFEP (Perfluorethylenpropylen), FEP (Fluorethylenpropylen), PFA (Perfluoralkoxy-Polymere), PCTFE (Polychlortrifluorethylen), ETFE (Ethylen-Tetrafluorethylen) und/oder eine Mischung umfassend mindestens zwei der Polymere und optional umfassend anorganische Partikel und/oder diese Zusammensetzung infiltriert in einem keramischen Gerüst.

5. Aufnahme (2) nach einem der Ansprüche 1 bis 4, **dadurch gekennzeichnet, dass** das gegenüber Chlorid-Ionen beständige Material umfasst
i) Nickellegierung mit einem Nickelgehalt von größer gleich 45 Gew.-% und einem Phosphorgehalt von größer gleich 8 Gew.-% in Bezug auf die Gesamtzusammensetzung von 100 Gew.-% der Nickellegierung.

6. Aufnahme (2) nach einem der Ansprüche 1 bis 5, **dadurch gekennzeichnet, dass**
i) die Aufnahme (2) oder die eine Aufnahme (2) eine Aufnahme (2) einer Mehrzahl von Aufnahmen (2) in einem mehrteilig ausgebildeten 3D-Formkörper oder materialeinstückig ausgebildeten 3D-Formkörper aus thermisch leitfähigem Metall oder einer metallischen Legierung gebildet ist, und/oder
ii) an der äußeren Oberfläche (2.2) der Aufnahme (2) ist zumindest teilweise und optional bis vollständig eine Heizvorrichtung (1) und/oder ein Heizmittel (12) angeordnet, insbesondere ist die äußere Oberfläche (2.2) zumindest teilweise von einer Heizvorrichtung (1) und/oder einem Heizmittel (12) umgeben.

7. Aufnahme (2) nach einem der Ansprüche 1 bis 6, **dadurch gekennzeichnet, dass** die Aufnahme (2) einen Hohlraum ausbildet, in den die Elektrochemische-Zelle (0) einsetzbar, vorzugsweise vollständig einsetzbar, ist, insbesondere ist der Hohlraum im wesentlichen komplementär zur äußeren seitlichen und unteren Wand der Elektrochemischen-Zelle (0) ausgebildet, und optional ist die Aufnahme (2) mittels eines Verschlussmittels (9), einer Überführeinheit (3) und/oder mindestens einer Schleuse (7) hermetisch verschließbar.

8. Vorrichtung (20) zum Befüllen und optional Verschließen mindestens einer Elektrochemischen-Zelle (0) mit einem Einfüllbereich (10),
**dadurch gekennzeichnet, dass**
die Vorrichtung (20) umfasst
- mindestens eine Aufnahme (2) zum Befüllen einer Elektrochemischen Zelle (0) nach einem der Ansprüche 1 bis 7
-
a) eine Überführeinheit (3), wobei die Überführeinheit (3) mindestens eine Zuführung (3.1) zur reversibel lösbaren oder festlegbaren dichten Verbindung, insbesondere hermetischen Verbindung, mit dem Einfüllbereich (10) der Elektrochemischen-Zelle (0) aufweist, und/oder
b) mindestens eine Schleuse (7, 7.1, 7.2), wobei die mindestens eine Schleuse (7, 7.1, 7.2) ausgebildet ist zur Einstellung und/oder Regulierung einer Atmosphäre in einem hermetisch abdichtbaren Hohlraum (11), und/oder
c) Verschlussmittel (9) für Einfüllbereich (10) der Elektrochemischen-Zelle (0), und/oder
- wobei sich ein hermetisch abdichtbarer oder hermetischer Hohlraum (11) ausbildet, wenn i) die b) mindestens eine Schleuse (7, 7.1, 7.2) einen Überführbereich (7.1.2, 7.2.2) aufweist, und der jeweilige Überführbereich (7.1.2, 7.2.2) der mindestens einen Schleuse (7, 7.1, 7.2) mit dem jeweiligen Einfüllbereich (10) einer Elektrochemischen-Zelle (0) verbunden ist, und/oder
ii) die b) mindestens eine Schleuse (7, 7.1, 7.2), insbesondere mit ihrer unteren Öffnung (7.1.5, 7.2.5)
a) auf eine Heizvorrichtung (1) umfassend mindestens eine Aufnahme (2) aufgesetzt wird und optional festgelegt wird, wobei optional die mindestens eine Aufnahme (2) eine Elektrochemische-Zelle (0) umfasst, oder
b) auf 3D-Formkörper umfassend mindestens eine Aufnahme (2), insbesondere ein Gehäuse (1.1) umfassend die Heizvorrichtung (1) aufgesetzt und optional festgelegt wird, und/oder
c) mit der oberen Öffnung (2.1) der Aufnahme (2) für eine Elektrochemische-Zelle (0) verbunden wird und jeweils eine Verbindung, insbesondere hermetische Verbindung, ausgebildet wird, und/oder
d) auf eine weitere Schleuse, insbesondere wird eine zweite oder weitere Schleuse auf eine erste Schleuse oder zweite Schleuse oder weitere Schleuse, aufgesetzt, und/oder
iii. c) wobei sich ein hermetisch abdichtbarer Hohlraum (13) oder hermetischer Hohlraum (13) im Kathodenraum ausbildet, wenn das c) Verschlussmittel (9) in den Einfüllbereich (10) der Elektrochemischen-Zelle (0) eingesetzt wird, insbesondere bildet sich ein hermetischer Hohlraum (13) im Kathodenraum der Elektrochemischen-Zelle (0) aus.

9. Vorrichtung (20) nach Anspruch 8, **dadurch gekennzeichnet, dass** die mindestens eine Schleuse (7, 7.1, 7.2) ausgebildet ist als hermetisch abdichtbare Schleuse,
i) für die Einstellung und/oder Regelung der Atmosphäre im Hohlraum (11), insbesondere wobei die mindestens eine Schleuse (7, 7.1, 7,2) umfasst mindestens einen Atmosphären-Anschluss (7.1.1, 7.2.1), und/oder
ii) für die Zuführung von Infiltrat in den Einfüllbereich der mindestens einen Elektrochemischen-Zelle (0), insbesondere umfassend einen Überführbereich und/oder eine untere Öffnung und/oder eine obere Öffnung,
wobei insbesondere der Hohlraum (11) innerhalb der Schleuse und dem Einfüllbereich der Elektrochemischen-Zelle (0) ausgebildet wird, vorzugsweise als hermetisch dichter Hohlraum.

10. Vorrichtung (20) nach Anspruch 8 oder 9, **dadurch gekennzeichnet, dass** die
- mindestens eine Schleuse (7, 7.1, 7.2) umfasst mindestens eine umlaufende Seitenwand (7.1.6, 7.2.6), mindestens eine untere Öffnung (7.1.5, 7.2.5), mindestens eine obere Öffnung (7.1.4, 7.2.4) und mindestens einen Schleusen-Verschluss (8) zum hermetischen Verschließen der mindestens einen oberen Öffnung (7.1.4, 7.2.4) und/oder
- mindestens eine Schleuse (7, 7.1, 7.2) umfasst mindestens einen Atmosphären-Anschluss (7.1.1, 7.2.1), insbesondere einen Atmosphären-Anschluss zur Einstellung und/oder Regelung der Zufuhr und/oder dem Entfernen von Atmosphäre, insbesondere zur Einstellung eines Vakuums.

11. Vorrichtung (20) nach einem der Ansprüche 8 bis 10, **dadurch gekennzeichnet, dass** sie umfasst i) mindestens eine erste Schleuse (7.1) umfassend mindestens eine untere Öffnung (7.1.5), eine obere Öffnung (7.1.4) und optional mindestens ein Dichtmittel der ersten Schleuse (7.1.3) und optional mindestens einen ersten Atmosphären-Anschluss (7.1.1), insbesondere einen ersten Atmosphären-Anschluss zur Einstellung und/oder Regelung der Zufuhr und/oder dem Entfernen von Atmosphäre, insbesondere zur Einstellung eines Vakuums, und/oder
ii) mindestens eine zweite Schleuse (7.2) umfassend mindestens eine untere Öffnung (7.2.5), eine obere Öffnung (7.2.4) und optional mindestens ein Dichtmittel der zweiten Schleuse (7.2.3) und optional mindestens einen zweiten Atmosphären-Anschluss (7.2.1), insbesondere einen ersten Atmosphären-Anschluss zur Einstellung und/oder Regelung der Zufuhr und/oder dem Entfernen von Atmosphäre, insbesondere zur Einstellung eines Vakuums, wobei insbesondere die erste oder zweite Schleuse in der jeweils anderen Schleuse anordbar ist oder die erste und zweite Schleuse aufeinander anordbar sind und jede Schleuse einen unabhängig hermetisch abdichtbaren Hohlraum, insbesondere ersten Hohlraum und/oder zweiten Hohlraum, ausbildet und die erste und zweite Schleuse gemeinsamen ausbildbaren und einen hermetisch abdichtbaren Hohlraum ausbilden.

12. Vorrichtung (20) nach einem der Ansprüche 8 bis 11, **dadurch gekennzeichnet, dass**
i) ein hermetischer Hohlraum (11) ausgebildet wird durch Verbinden der unteren Öffnung (7.1.5, 7.2.5) der mindestens einen Schleuse (7, 7.1, 7,2), wobei die Schleuse optional mindestens einem Atmosphären-Anschluss (7.1.1, 7.2.1) aufweist, mit dem Einfüllbereich (10) der Elektrochemischen-Zelle (0) oder mit der oberen Öffnung (2.2) der Aufnahme der Elektrochemischen Zelle (0), und/oder
ii) ein hermetisch Hohlraum (13) ausgebildet wird durch Verschließen des Einfüllbereiches (10) der Elektrochemischen-Zelle (0) mit dem Verschlussmittel (9, 9.1, 9.2) oder dem Verschlussmittel mit Ventil (9.3), wobei der Hohlraum (13) ausgebildet wird im Kathodenraum mit kathodenseitigem Stromabnehmer der Elektrochemischen-Zelle (0), insbesondere unterhalb des hermetisch mit dem Einfüllbereich (10) der Elektrochemischen-Zelle (0) verbundenen Verschlussmittels (9, 9.1, 9.2) oder des Verschlussmittels mit Ventil (9.3).

13. System umfassend eine Aufnahme (2) nach einem der Ansprüche 1 bis 7 und/oder eine Vorrichtung (20) nach einem der Ansprüche 8 bis 12, insbesondere mit mindestens einem Verschluss (8), der mindestens ein Laserglas (8) umfasst,
**dadurch gekennzeichnet, dass**
es umfasst eine Laser-Schweißeinheit (30), insbesondere mit einer Optik mit Tiefenschärfekorrektur für die Einstellung des Laser-Fokus, insbesondere der Fokuspositionierung des Lasers der Laser-Schweißeinheit (30) beim Schweißen, besonders bevorzugt beim Schweißen des Kathodenverschlusses des Einfüllbereiches (10) der Elektrochemischen-Zelle (0) der Kathode.

14. Verschlussmittel (9, 9.1, 9.2, 9.3) zum Verschließen des kathodenseitigen Bereiches der Elektrochemischen-Zelle (0), **dadurch gekennzeichnet, dass** das Verschlussmittel (9, 9.1, 9.2, 9.3) umfasst im unteren kathodenseitigen Bereich eine umlaufende Nut, insbesondere mit Dichtmittel (4), oder einen umlaufenden mit dem Verschlussmittel materialeinstückig ausgebildeten Wulst als Dichtmittel und optional einen oberen gegenüber des kathodenseitigen Bereiches liegenden Bereich mit einem Positioniermittel (9.1.1, 9.2.1, 9.3.1) zum Positionieren des Verschlussmittels, insbesondere wobei das Verschlussmittel (9.3) ein Ventil (9.3.2) aufweist, um den unteren kathodenseitigen Bereich des Verschlussmittels (9.3), insbesondere unterer kathodenseitiger Bereich mit Öffnung (9.3.4), mit dem oberen gegenüber des kathodenseitigen Bereiches liegenden Bereich oder einen außerhalb des kathodenseitigen Bereiches des Verschlussmittels liegenden Bereiches des Verschlussmittels mit der äußeren Oberfläche des Verschlussmittels reversibel hermetisch dicht oder offen für einen Austausch und/oder eine Einstellung der Atmosphäre außerhalb des kathodenseitigen Bereiches der Elektrochemischen-Zelle (0) mit der Atmosphäre in der Elektrochemischen-Zelle (0), einstellbar auszubilden, insbesondere oberer Bereich des Verschlussmittels mit Öffnung (9.3.1), bevorzugt sind Öffnung (9.3.1) und Öffnung (9.3.4) über ein Ventil verbunden.

15. Kit umfassend mindestens eine Aufnahme (2) nach einem der Ansprüche 1 bis 7 mit
- mindestens einer Schleuse (7, 7.1, 7.2), deren untere Öffnung (7.1.5, 7.2.5) mit dem Einfüllbereich (10) der Elektrochemischen-Zelle (0) verbunden ist, oder
- einer Überführeinheit (3) mit Zuführung (3.1), die mit dem Einfüllbereich (10) der Elektrochemischen-Zelle (0) verbunden ist, wobei
insbesondere jeweils unabhängig ein hermetisch dichter Hohlraum (11) ausgebildet ist, besonders bevorzugt für den Austausch und/oder die Einstellung der Atmosphäre im Hohlraum (11).

16. Kit umfassend mindestens eine Elektrochemische-Zelle (0) mit je einem Verschlussmittel nach Anspruch 14, das verbunden ist mit dem Einfüllbereich (10) der Elektrochemischen-Zelle (0), insbesondere umfassend jeweils unabhängig einen hermetisch dichten Hohlraum (13) umfassend den Kathodenraum mit kathodenseitigem Stromabnehmer der Elektrochemischen-Zelle (0), optional umfassend eine Kathode, insbesondere eine Kathode, die frei von Feuchtigkeit und/oder Wasser ist, besonders bevorzugt mit Verschlussmittel (9.3) mit Ventil (9.3.2) für den Austausch und/oder die Einstellung der Atmosphäre im Hohlraum (13).
